(19) Europäisches Patentamt
European Patent Office
Office européen des brevets

(11) **EP 2 708 739 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(51) Int Cl.:
*F03D 80/00* (2016.01)    *F03D 7/02* (2006.01)
*F03D 1/06* (2006.01)    *F16C 19/18* (2006.01)
*F16C 19/38* (2006.01)    *F16C 19/50* (2006.01)
*F16C 33/58* (2006.01)

(21) Anmeldenummer: **13004540.4**

(22) Anmeldetag: **17.09.2013**

(54) **Blattlager für die verdrehbare Lagerung eines Rotorblattes an der Nabe einer Windkraftanlage sowie damit ausgerüstete Windkraftanlage**

Blade bearing for the rotatable mounting of a rotor blade on the hub of a wind turbine and wind power turbine equipped with the same

Logement de pale pour le logement rotatif d'une pale de rotor au niveau du moyeu d'une installation éolienne et installation éolienne équipée de celui-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2012 DE 102012018258**

(43) Veröffentlichungstag der Anmeldung:
**19.03.2014 Patentblatt 2014/12**

(73) Patentinhaber: **IMO Holding GmbH**
**91350 Gremsdorf (DE)**

(72) Erfinder:
• **Russ, Erich**
**91350 Gremsdorf (DE)**

• **Frank, Hubertus**
**91315 Höchstadt (DE)**
• **Dietz, Volker**
**91315 Höchstadt (DE)**

(74) Vertreter: **Küchler, Stefan**
**Patentanwalt**
**Färberstrasse 20**
**90402 Nürnberg (DE)**

(56) Entgegenhaltungen:
**EP-A2- 1 596 064      DE-A1-102005 026 141**
**DE-U1- 20 208 134      US-A1- 2009 289 460**
**US-B1- 6 945 752**

EP 2 708 739 B1

## Beschreibung

Die Erfindung richtet sich zum Einen auf ein Blattlager für die verdrehbare Lagerung eines Rotorblattes an der Nabe einer Windkraftanlage mit einer Einrichtung zur Einstellung des Rotorblatt-Anstellwinkels, umfassend zwei rotationssymmetrische Anschlusselemente mit je einer ebenen Anschlussfläche zum drehfesten Anschluss an zwei unterschiedliche Maschinen- oder Anlagenelemente oder an ein Maschinen- oder Anlagenelement einerseits und ein Chassis oder Fundament andererseits, wobei die beiden rotationssymmetrischen Anschlusselemente derart ausgerichtet sind, dass ihre Symmetrieachsen koaxial zueinander verlaufen und ihre Anschlussflächen einander abgewandt sind, wobei sich ferner zwischen den beiden Anschlusselementen ein Spalt befindet, worin wenigstens eine Wälzlagerung als Hauptlager angeordnet ist zur Lagerung der beiden Anschlusselemente aneinander, drehbeweglich um eine Hauptlagerdrehachse, welche der gemeinsamen Symmetrieachse beider Anschlusselemente entspricht, und wobei wenigstens eine Mantelfläche eines Anschlusselements mit einer rundum laufenden Verzahnung versehen ist; und zum Anderen auf eine Windkraftanlage mit einem vorzugsweise um eine etwa in Windrichtung verlaufende Achse rotierenden Windrad, dessen Rotor über ein derartiges Blattlager einem Rotorblatt gekoppelt ist, mit ein, zwei oder mehr an den zusätzlichen Drehanschlüssen angekoppelten Motoren, wobei das Blattlager zwei rotationssymmetrische, vorzugsweise ringförmige Anschlusselemente aufweist mit jeweils wenigstens einer ebenen Anschlussfläche zur drehfesten Ankopplung an der Rotornabe der Windkraftanlage einerseits und an einem Rotorblatt andererseits.

Bisher laut Stand der Technik bekannt und insbesondere in internationalen Märkten durchgesetzt haben sich Windenergie- oder Windkraftanlagen (WKA) mit einem Windrad, welches drehbar gelagert ist um eine etwa horizontale Rotorachse, die innerhalb einer horizontalen Ebene verstellbar und dadurch der jeweiligen Windrichtung nachführbar ist, derart, dass sie zu dieser stets etwa parallel verläuft. Dieses Windrad trägt an seiner Nabe mehrere, langgestreckte Rotorblätter, deren Längsachse von der Rotorachse etwa radial auskragt. Zentrale Bestandteile derartiger Windkraftanlagen sind überdies ein Turm und eine drehbare Gondel an dessen oberem Ende; an der Gondel ist die Nabe des Windrades mit den Rotorblättern gelagert.

Solche Windkraftanlagen dienen dem technischen Prinzip, die Energie der windbedingten Luftströmung zunächst in die mechanische Rotationsenergie des rotierenden Windrades zu übertragen und dann in der Regel in die elektrische Energieform umzuwandeln. Zumeist werden für Letzteres Generatoren verwendet, welche entweder direkt an der Welle der sich drehenden Nabe angebracht sind oder über ein Hauptgetriebe einen Generator treiben.

Um dabei auch bei unterschiedlichen Windverhältnissen jeweils eine optimale Ausbeute an Energieaufnahme zu bewirken, sind die Rotorblätter an der Nabe verdrehbar gelagert, insbesondere um ihre Längsachse verdrehbar, und können dadurch je nach Bedarf in den und aus dem Wind gedreht werden, wodurch die Anströmfläche variiert wird. Derartige moderne Windkraftanlagen sind also hinsichtlich der Windrichtungsnachführung und des Anstellwinkels, in Fachkreisen auch Pitch genannt, verstellbar. Bei mehreren Rotorblättern sind diese um etwa gleiche Winkel um die Rotorachse versetzt angeordnet. Aufgrund der großen Höhe moderner Windkraftanlagen erfährt daher jedes Rotorblatt im Allgemeinen unterschiedliche Windverhältnisse; dies betrifft insbesondere die Windgeschwindigkeiten, da diese je nach der aktuellen Höhe des betreffenden Rotorblattes über Grund teilweise erheblich variieren können. Um auf diese unterschiedlichen Windverhältnisse optimal eingehen zu können, wird bei modernen Windkraftanlagen zumeist eine Einzelblattverstellung bevorzugt, d.h., der Anstellwinkel ist für jedes Rotorblatt unabhängig von den Anstellwinkeln der anderen Rotorblätter verstellbar.

In der DE 20 2005 007 450 U1 wird ein Adapter vorgeschlagen zum Befestigen von Rotorblättern einer Windkraftanlage an einer Rotornabe. Dieser Adapter hat eine etwa zylindermantelförmige Gestalt, dessen beide Stirnseiten jeweils als Anschlussflächen zum Anschluss an die Nabe einerseits und an das rückwärtige Ende des betreffenden Rotorblattes andererseits dienen. Im Bereich einer vorzugsweise der Nabe zugewandten Stirnseite ist ein Ring eines Momentenlagers anschraubbar, an welchem über zwei rundum laufende Kugelreihen ein zweiter Ring verdrehbar gelagert ist. Jener zweite Ring ist an seiner Innenseite verzahnt, und mit dieser Verzahnung kämmt ein Ritzel eines Antriebsmotors, dessen Gehäuse an einem nach innen vorspringenden Bund des Adapters befestigt ist. Der Antriebsmotor selbst befindet sich - wie auch diesen ansteuernde Schaltkreiselemente - innerhalb des Adapters. Durch diese mannigfaltigen Einbauten erhält der Adapter eine große Bauhöhe, welche etwa seinem Radius entspricht oder gar größer ist als jener.

Dieser vorbekannte Adapter bringt eine Reihe von Nachteilen mit sich: Einerseits verkürzt dessen große Bauhöhe die aerodynamisch nutzbare Anströmfläche des Rotorblattes; andererseits dreht sich der Motor mit dem Adapter mit, ist also nicht fest an der Nabe montiert, sondern an dem Adapter selbst. Dabei stützt sich das Ritzel bei Drehantrieb an der rundum laufenden Verzahnung des mit der Rotornabe verbundenen Adapterrings ab und drückt damit das Motorbzw. Getriebegehäuse in entsprechender Richtung weg, und diese Bewegung wird schließlich von dem betreffenden Gehäuse über dessen Verankerung an den Adapter selbst weitergegeben, und vermittels desselben schließlich an das betreffende Rotorblatt übertragen. Weil sich jedoch die Verankerung des Motor- oder Getriebegehäuses in axialer Richtung der Blattachse weit von dem Ritzel entfernt befindet, sind dabei Verwindungen der Ritzelachse vorprogrammiert, worunter die Qualität des Verzahnungseingriff zwischen Ritzel und entlang des Rings umlaufender Verzahnung leidet, was nicht nur einen erhöhten Verschleiß auslöst, sondern auch ein erhöhtes Verzahnungsspiel mit sich bringt und damit zu regelungstechnischen Instabilitäten führen kann. Aus EP 1 596 064 ist eine Blattlagerbaugruppe gemäß dem Oberbegriff von Anspruch 1 bekannt. Aus den Nachteilen des beschriebenen Standes der Technik resultiert das die Erfindung initiierende Problem, ein Blattlager für die verdrehbare Kopplung zwischen der Nabe des Windrades einer Windkraftanlage und einem Rotorblatt derart auszugestalten, dass die Einrichtung zur Verstellung des Rotorblatt-Anstellwinkels möglichst verschleiß- und spielfrei ist und nach Möglichkeit der Abstand des Blattendes von der Nabe möglichst gering gehalten werden kann, um demzufolge eine maximale Anströmfläche des Rotorblattes nutzbar ist.

Die Lösung dieses Problems gelingt durch eine Blattbaugruppe gemäß Anspruch 1.

Diese integrierte Gesamtanordnung bietet grundsätzlich die Möglichkeit der Mittenfreiheit und benötigt nur ein einziges, ringförmiges Maschinenelement in Form des verzahnten Anschlusselements, in welches alle Getrieberäder ihr Drehmoment einleiten. Dabei kann die gesamte Blattlagerbaugruppe als abgeschlossenes System konzipiert sein. Da die Getrieberäder im Allgemeinen einen erheblich kleineren Durchmesser aufweisen als die Verzahnung des verzahnten Anschlusselements und daher auch deutlich weniger Zähne, erfolgt gleichzeitig mit der Drehmomentaddierung auch eine Drehzahlunter- und eine Drehmomentübersetzung, so dass aus einer schnelleren Drehzahl eines Drehantriebsmotors eine langsamere Drehbewegung des Rotorblattes um dessen Längsachse resultiert. Somit kann mit einem für Elektromotoren erheblich günstigeren Drehzahlbereich gearbeitet werden, und gleichzeitig können Motoren mit vergleichsweise geringem Nennmoment eingesetzt werden. Für das Drehzahlverhältnis $n_M / n_B$ und das Drehmomentverhältnis $D_M / D_B$ zwischen Drehantrieb und Rotorblatt ist bei gleichem Modul der beteiligten Verzahnungen vor allem das Verhältnis zwischen der Zähnezahl $z_A$ der Verzahnung an dem verzahnten Anschlusselement einerseits und der Zähnezahl $z_G$ der Getriebezahnräder andererseits von Bedeutung; für das Drehmoment außerdem auch die Anzahl n der Getriebezahnräder:

$$n_M / n_B = z_A / z_G;$$

$$D_M / D_B = z_G / (n{*}z_A).$$

Bei geeigneter Dimensionierung dieser Parameter $z_A$, $z_G$ ist daher die Zwischenschaltung von Getriebestufen entbehrlich.

In diesem Zusammenhang sollte darauf hingewiesen werden, dass durch die unmittelbare Lagerung der Getrieberäder an dem unverzahnten Anschlusselement - an welchem andererseits auch das verzahnte Anschlusselement über die Hauptlagerung geführt ist - eine präzise Ausrichtung dieser verzahnten Elemente gewährleistet ist, wodurch die Wartungsfreundlichkeit oder gar die Wartungsfreiheit dieser Steuerelemente resultiert. Durch die weitgehende Kapselung der Getrieberäder sind diese vor eindringenden (Schmutz-) Partikeln geschützt und können daher auch bei rauhen Betriebsbedingungen kaum beschädigt werden. Schließlich erlaubt die weitgehende Kapselung der Getrieberäder auch eine optimale Schmierung derselben, wobei das Schmierfett durch die betreffenden Getriebeabschnitte des Gehäuses dauerhaft an Ort und Stelle gehalten wird.

Die Erfindung erlaubt die Verwendung mehrerer Drehantriebseinheiten zur Steuerung des Energieflusses zwischen Rotorblatt und Rotornabe, welche bevorzugt gleichmäßig oder zumindest symmetrisch in Bezug auf die Hauptdrehachse angeordnet werden, so dass daraus keine systemimmanente Unwucht entstehen kann. Durch mehrere derartige Drehantriebseinheiten kann überdies eine gewisse Redundanz vorgesehen werden, und außerdem lässt sich die notwendige Steuerenergie auf mehrere Antriebseinheiten aufteilen, welche dadurch jeweils erheblich leichter gebaut werden können und damit deutlich preiswerter sind. Nicht zuletzt ist dadurch ein komplexerer Eingriff in das System möglich: Beispielsweise können zwei Drehantriebe auf minimal gegeneinander verschobene Sollwerte eingestellt werden, so dass sie nach Erreichen eines mittleren Sollwertes gegeneinander arbeiten; dadurch werden über die jeweiligen Verzahnungseingriffe unterschiedliche oder gar einander entgegengesetzte Kräfte in das betreffende Rotorblatt eingeleitet, so dass eine gegenseitige Verspannung aufgebaut wird, wodurch das Rotorblatt völlig spielfrei eingeklemmt wird.

Ein weiterer Vorteil ist die erhöhte Montage- und Demontagefreundlichkeit der Erfindung, da man nur noch eine im Wesentlichen geschlossene Blattlagerbaueinheit benötigt, beinhaltend alle kraftübertragenden Elemente, vorzugsweise unter separater Ausführung der nachträglich anbaubaren oder anflanschbaren Hydraulik-, Getriebe- oder Elektromotoren.

Insgesamt gesehen handelt es sich bei der Erfindung demnach nicht um eine Zusammenschaltung von Einzelkomponenten und Kombinationen, wie im Stand der Technik vorbeschrieben, sondern um eine flache, zylinder- oder ringförmige Baugruppe, insbesondere als einbaufertige Gesamtanordnung, woran direkt die Nabe, ein Rotorblatt und ein oder mehrere Drehantriebe zur Einstellung des Anstellwinkels angeschlossen werden können.

Die vorliegende Erfindung schafft eine universelle Baugruppe als Bestandteil einer Windkraftanlage in Form einer einbaufertigen Gesamtanordnung zur Übertragung von Energie aus mechanischen Kräften und Momenten von einem Rotorblatt an die Nabe, wobei die von der strömenden Luft aufgenommene Energiemenge durch die an die Steueranschlüsse angekoppelten Drehantriebseinheiten beeinflusst werden kann. Zu diesem Zweck verfügt die erfindungsgemäße Blattlagerbaugruppe über mindestens einen ersten Hauptwälzlagerring, insbesondere als Innen- oder Außenring eines mehrreihigen Großwälzlagers oder Momentenlagers, sowie über mindestens einen zweiten Hauptwälzlagerring, insbesondere als Innen- oder Außenring eines vorzugsweise mehrreihigen Großwälzlagers oder Momentenlagers; ferner verfügt die Baugruppe weiterhin über mindestens eine Laufbahn mit Wälzkörpern, wobei die jeweils mindestens eine Laufbahn die Hauptwälzlagerringe gegeneinander verdrehbar lagert. Charakteristisch ist, dass eines der zur Übertragung von Energie aus mechanischen Kräften und Momenten von der Blattseite zur Nabenseite vorhandenen Maschinenelemente, nämlich einer der beiden Hauptwälzlagerringe, verzahnt ist und gleichzeitig mindestens eine der genannten Laufbahnen trägt.

Vorteilhaft ist dabei auch, dass die erfindungsgemäße Blattlagerbaugruppe Mittenfreiheit besitzt, d.h., eine zentrale Öffnung um die Hauptlagerdrehachse aufweist, die natürlich optional durch Abdeckplatten oder durch ein sonstiges Gehäuse verschlossen sein kann, aber auch bei Bedarf einen vereinfachten Zugang bspw. zu dem Rotorblatt einer Windkraftanlage ermöglicht. In dieser Mitte können ebenso Sensorsignalleitungen oder sonstige Leitungen platziert werden. Bei großen Ausführungen eines erfindungsgemäßen Getriebes ist ein Rotorblatt durch die Mittendurchführung hindurch sogar begehbar, so dass ein Servicetechniker von der Seite des Maschinenträgers her durch die Nabe in die Rotorblätter hinein gelangen kann und somit alle wesentlichen Teile einer Windkraftanlage erreichen kann.

Durch eine Anordnung aller wichtigen Funktionseinheiten bei einer gemeinsamen axialen Position kann die Höhe L der erfindungsgemäßen Baugruppe, also deren axiale Erstreckung zwischen ihren beiden Anschlussflächen, sehr gering gehalten werden, insbesondere kleiner als die radiale Erstreckung der Ringquerschnitte von ihrem äußersten Umfang bis zu der lichten Öffnung in ihrer Mitte, ggf. bei abgenommenen Abdeckblechen.

Durch diese geringe Bauhöhe L können die Rotorblätter sehr nahe an die Nabe herangerückt werden, und daher steht bei gegebenem Durchmesser des Windrades eine maximale Strömungsfläche pro Rotorblatt für die Umwandlung von Windenergie in mechanische Energie zur Verfügung.

Indem eines der Anschlusselemente bzw. Hauptwälzlagerringe an der Nabe des Windrades einer Windkraftanlage festgelegt ist und das andere an dem rückwärtigen Ende des betreffenden Rotorblattes, trägt diese Hauptdrehlagerung dann das gesamte Rotorblatt und leitet also bspw. dessen Gewichtskraft in die Nabe und von dort in den Turm ab; das selbe geschieht mit der Winddruckkraft. Das vom Wind verursachte Antriebsdrehmoment wird zwar auch in die Nabe eingeleitet, von dieser aber an die Rotorwelle und schließlich zu einem oder mehreren Elektrogeneratoren übertragen und dort in Strom umgewandelt.

Mittels der erfindungsgemäßen Getriebeverzahnung lässt sich der Energiefluss von dem Rotorblatt zu der Rotornabe steuern, ähnlich wie bei einem Transistor mit dem Basisanschluss der Stromfluss vom Kollektor zum Emitter gesteuert werden kann. Dabei ist die an den Steuer-Drehanschlüssen zuzuführende Energie im Normalfall um ein Vielfaches kleiner als die zur Nabe fließende und dort nutzbare Energie. Gleichzeitig erfolgt eine Herabsetzung der Drehzahl von dem schnelleren Antrieb zu dem langsam schwenkenden Rotorblatt und damit eine optimale Adaptierung an die verwendeten Drehantriebe.

Das erfindungsgemäße Blattlager ist - ggf. mit Ausnahme einer zentralen Öffnung um seine Haupt- oder Mittenachse - von einem Gehäuse vorzugsweise mindestens einseitig umschlossen. Die Anschlusselemente sind dabei nach Art eines Innen- und Außenrings eines vorzugsweise mehrreihigen Großwälzlagers ausgebildet, welche jeweils zumindest eine Laufbahn für Wälzkörper aufweisen, so dass die Anschlusselemente gegeneinander verdrehbar gelagert sind, unter Ausbildung eines Lagerspaltes.

Im Folgenden wird von der Definition ausgegangen, dass ein sogenanntes "Ritzel" das kleinere bewegte Rad einer "Zahn-Zahnlücken-Paarung ist": Insbesondere wird im Sinne der Erfindung vorgeschlagen, anstatt der Stirnräder in jedem Fall wesentlich kleiner bauende Ritzel zu verwenden; im vorliegenden Fall kann daher mancherorts anstelle des Begriffs "Getriebezahnräder" auch der kürzere Begriff "Ritzel" verwendet werden, da dessen Durchmesser kleiner ist als der der Verzahnung des verzahnten Anschlusselements.

Da um die Hauptdrehachse herum an dem unverzahnten Anschlusselement vorzugsweise mehrere drehbar gelagerte Getriebezahnräder vorgesehen sind, welche vorzugsweise alle den selben Durchmesser und damit auch die selbe Zähnezahl $z_G$ aufweisen und demzufolge von der Mittenachse in etwa den gleichen Abstand besitzen, kann die Einleitung der Steuerenergie symmetrisch erfolgen, d.h., bei Ankopplung gleicher Baugruppen als jeweilige Drehantriebseinheiten steuern diese jeweils gleiche Leistungen bei, und die gesamte Steuerleistung $P_S$ speist sich symmetrisch aus alle diesen Baugruppen mit jeweils gleicher Antriebsleistung $P_A$:

$$P_A = P_S / n,$$

so dass bei Vernachlässigung von Reibungsverlusten gilt:

$$P_S = n * P_A.$$

Bemerkenswert ist auch ein als Ritzelgehäuse dienendes Getriebeelement: Ein Ritzel, insbesondere jedes einzelne der vorhandenen Ritzel, kann durch jeweils ein separates Ritzelgehäuse teilumschlossen sein, ist aber zumindest radial von der Hauptdrehachse her abgeschlossen, so dass das jeweilige Ritzel gegenüber körperlichen Eingriffen vom radialen Zentrum der zylinder-oder ringförmigen Gesamtanordnung her geschützt ist. Insbesondere soll die Schutzwirkung so sein, dass das Ritzelgehäuse im Wesentlichen nur dem Eingriff mit dem jeweils kämmenden Element unterliegt. Das Ritzelgehäuse kann einstückig oder mehrstückig ausgeführt sein, insbesondere ist eine Ausführung als ein um die Mittenachse konzentrischer Gehäusering denkbar. Dieser kann mit dem unverzahnten Anschlusselement integriert sein oder mit diesem verbunden sein, beispielsweise an- und abschraubbar bzw. anflanschbar. Natürlich kann dieser als Ritzelgehäuse wirkende Ringabschnitt auch als eine koaxiale Erweiterung des betreffenden Anschlusselements an sich ausgeführt sein, insbesondere auch als ein einziges Gussteil.

Für die Aufnahme der Getriebezahnräder bzw. Ritzel können Ausnehmungen und/oder Bohrungen vorgesehen sein, also exakt dort, wo ein Ritzel bei der Montage oder Demontage hindurch gesteckt werden soll.

Die antriebsseitige Abdeckplatte ist dabei nicht mit dem Ritzelgehäuse körperlich verbunden, sondern vorzugsweise drehfest an dem verzahnten Anschlusselement angeschlossen. Daher verbleibt innerhalb des solchermaßen umschließenden Gehäuses ein Spalt zu dem nicht mit der betreffenden Montageseite mit rotierenden Anschlusselement bzw. Ritzelgehäuse, welcher eine leichtgängige Verdrehbarkeit zwischen diesen Elementen gewährleistet.

Bevorzugt ist die Verzahnung an der radial innen liegenden Mantelfläche des Innenrings angeordnet, so dass sich die Getriebezahnräder radial innerhalb des Innenrings befinden und das erfindungsgemäße Blattlager nur einen minimalen Platzbedarf hat. Im Übrigen geht diese kleinere Bauweise normalerweise auch einher mit einem geringeren Gewicht, was gerade bei dem Windrad einer Windkraftanlage nicht unwesentlich ist.

Der im Folgenden verwendete Begriff "Großwälzlager" betrifft ein Momentenlager des Maschinen- und Anlagenbaus, welches sowohl Axial-, Radial- als auch Kippmomentbelastungen aufnehmen kann.

Das unverzahnte Anschlusselement ist solchenfalls ausgestaltet nach Art eines nicht verzahnten Außenrings eines Großwälzlagers und kann aus mehreren Teilen zusammengefügt sein, sofern dies bspw. aus montagetechnischen Gründen nötig oder vorteilhaft ist.

Zwischen diesen beiden Anschlusselementen befindet sich ein Spalt, zu dessen Abdichtung ein Dichtungssystem vorhanden sein kann, vorzugsweise in Form eines ringförmigen Dichtungssystems, beispielsweise umfassend wenigstens einen umlaufenden Dichtungsring mit wenigstens einer Dichtlippe, oder aber auch umfassend ein System aus zwei oder mehr in Spaltrichtung hintereinander angeordneten Dichtungsringen. Eine vollständige Abdichtung des gesamten Blattlagers ermöglicht, dieses mit einem Schmiermittel, vorzugsweise Schmierfett, teilweise oder vollständig zu befüllen, um dessen Laufeigenschaften zu optimieren. Insbesondere an entlegenen Orten wie bspw. im Offshore-Bereich errichtete Windkraftanlagen sind oftmals für Wartungen nur schwer zugänglich, so dass eine Dauerschmierung von großem Interesse ist.

Bevorzugt ist das Gehäuseteil als dynamisch belastbarer Bestandteil des unverzahnten Hauptwälzlagerringes des Hauptlagers der erfindungsgemäßen Blattlagerbaugruppe ausgeführt, auf dessen Laufbahn die Wälzkörper, wie etwa rollen-, kugel-, zylinder-, tonnen- oder kegelförmige Wälzkörper, abrollen. Bevorzugt wird die Form eines dreireihigen Rollenlagers. Das genannte Gehäuseteil kann ein integraler Bestandteil des unverzahnten Rings des Hauptlagers der erfindungsgemäßen Blattlagerbaugruppe sein; es könnte einstückig mit jenem hergestellt sein oder formschlüssig oder kraftschlüssig oder form- und kraftschlüssig mit dem betreffenden Ring des Hauptlagers gekoppelt oder zumindest koppelbar sein, beispielsweise gemeinsam mit dem unverzahnten Ring dieses Hauptlagers als ein einziges, zusammenschraubbares, Teil ausgeführt sein.

Das verzahnte Anschlusselement kann einstückig aufgebaut sein, wodurch einerseits die Montage vereinfacht wird und andererseits das betreffende Anschlusselement eine maximale Stabilität erhält.

Andererseits besteht auch die Möglichkeit, das verzahnte Anschlusselement aus mehreren Ringen zusammenzusetzen.

Bevorzugt ist an einer der Verzahnung gegenüber liegenden Mantelfläche des verzahnten Anschlusselements wenigstens eine Laufbahn für eine Wälzkörperreihe der Hauptlagerung angeordnet. Eine Aufteilung von Laufbahn einerseits und Verzahnung andererseits auf zwei Mantelflächen hat zur Folge, dass bei minimaler Getriebebauhöhe ein maximaler Verzahnungseingriff möglich ist und zugleich auch eine ggf. mehrreihige Hauptlagerung. Bevorzugt ist wenigstens eine Laufbahn des verzahnten Anschlusselements gemeinsam mit dessen Verzahnung durch vorzugsweise spanabhebende Bearbeitung oder sonstige Formgebung eines einzigen, gemeinsamen Grundkörpers hergestellt.

Die Erfindung zeichnet sich weiterhin aus durch wenigstens eine Reihe von in dem verzahnten Anschlusselement kranzförmig verteilt angeordneten Befestigungselementen, insbesondere in dessen Anschlussfläche mündende Sacklochbohrungen mit Innengewinde, welche vorzugsweise in radialer Richtung zwischen der Verzahnung und wenigstens einer Laufbahn für eine Wälzkörperreihe der Hauptlagerung angeordnet ist. Dadurch ist es möglich, das betreffende Anschlusselement mittels in diese Befestigungselemente einschraubbarer (Maschinen-) Schrauben oder (Steh-) Bolzen an einem Maschinen- oder Anlagenteil oder an einem Chassis oder Fundament zu verankern. Auch diese Befestigungsbohrungen des verzahnten Anschlusselements können wie auch dessen Verzahnung durch Bearbeitung oder sonstige Formgebung eines einzigen, gemeinsamen Grundkörpers hergestellt sein.

Indem die Verzahnung und/oder wenigstens eine Laufbahn für die Wälzkörperreihe(n) der Hauptlagerung und/oder eine Reihe von kranzförmig angeordneten Befestigungselementen, insbesondere Sacklochbohrungen mit Innengewinde, durch Bearbeitung oder Formgebung des selben Anschlusselement-Grundkörpers gebildet sind, so können diese Maschinenelemente bei einer einzigen, gemeinsamen Aufspannung des Grundkörpers eingearbeitet werden, wodurch sich ein Höchstmaß an Präzision erreichen lässt.

Die Erfindung lässt sich dahingehend weiterbilden, dass an einer der Verzahnung gegenüber liegenden Mantelfläche des verzahnten Anschlusselements ein rundum laufender Bund vorgesehen ist, an welchem eine oder mehrere Laufbahn(en) für die Wälzkörper der Hauptlagerung angeordnet ist (sind). Ein solcher Bund weist eine in radialer Richtung weisende, zylindrische Randfläche auf sowie zwei in unterschiedliche axiale Richtungen weisende, jeweils ebene Ringflächen, welche als Ober- und Unterseite des Bundes Druckkräfte in unterschiedlichen axialen Richtungen aufnehmen können. Insgesamt lassen sich damit unterschiedlichste Radial-und Axialkräfte und Kippmomente aufnehmen.

Im Rahmen einer anderen Ausführungsform der Erfindung ist in dem verzahnten Anschlusselement eine zu einer Stirnseite offene, rundum laufende Ausnehmung zur Aufnahme des unverzahnten Anschlusselements vorgesehen, welche vorzugsweise einen T-förmigen Querschnitt aufweist.

Bei letzterer Ausführungsform sollte das unverzahnte Anschlusselement einen T-förmigen Querschnitt aufweist.

Sofern der Querschnitt des unverzahnten Anschlusselements kleiner ist als der Querschnitt der Ausnehmung in dem verzahnten Anschlusselement, ist sichergestellt, dass sich die beiden Anschlusselemente leichtgängig gegeneinander verdrehen können.

Bevorzugt wird wenigstens ein die Laufbahnen aufweisender Abschnitt des unverzahnten Anschlusselements von dem verzahnten Anschlusselement an drei Seiten umgriffen, insbesondere an einer seiner Stirnseiten und an zwei Mantelflächen.

Andererseits kann auch vorgesehen sein, dass der die Verzahnung aufweisende Abschnitt des verzahnten Anschlusselements von dem unverzahnten Anschlusselement an drei Seiten umgriffen wird, insbesondere an einer seiner Stirnseiten und an zwei Mantelflächen.

Die Hauptlagerung kann mehrere Reihen von Wälzkörpern aufweisen, bspw. zur Erhöhung der Tragkraft und/oder um für besondere Lastfälle jeweils eigene, besonders angepasste Wälzkörper vorzusehen.

So empfiehlt die Erfindung, dass die Hauptlagerung wenigstens ein Axiallager aufweist mit wenigstens einer Reihe von Wälzkörpern, deren Tragwinkel gleich oder größer ist als 45°. Aufgrund ihres großen Tragwinkels sind derartige Wälzkörper optimal für die Übertragung von Axialkräften und für die Aufnahme von Kippmomenten gerüstet.

Ferner liegt es im Rahmen der Erfindung, dass die Hauptlagerung ein Radiallager umfasst mit wenigstens einer Reihe von Wälzkörpern, deren Tragwinkel kleiner ist als 45°. Auch diese Wälzkörper sind für besondere Belastungen optimiert, nämlich für etwa radiale Belastungen.

Bei einer bevorzugten Realisierung der Erfindung umfasst die Hauptlagerung wenigstens eine Reihe von langgestreckten Wälzkörpern wie rollen-, tonnen-, nadel- oder kegelförmigen Wälzkörpern. Solche Wälzkörper haben im Allgemeinen eine höhere Tragkraft als kugelförmige Wälzkörper vergleichbarer Größe.

Besonders bewährt hat sich eine Anordnung, wobei die Wälzkörper zur Übertragung von Axialkräften als Kegelrollen ausgebildet sind, insbesondere derart, dass die der Hauptdrehachse der Blattlagerung zugewandte Rollenstirnfläche einen kleineren Durchmesser aufweist als die der Hauptdrehachse abgewandte Rollenstirnfläche. Demzufolge wird auch der rundumlaufende Bund, an welchem diese Kegelrollen entlanglaufen, keinen rechteckigen Querschnitt aufweisen, sondern einen trapezförmigen Querschnitt.

Andererseits werden auch bei kegelrollenförmigen Wälzkörpern für die axiale Kraftübertragung für die Übertragung von Radialkräften Zylinderrollen bevorzugt oder ggf. kugelförmige Wälzkörper.

Die Hauptlagerung kann allerdings auch wenigstens eine Reihe von kugelförmigen Wälzkörpern umfassen, vorzugsweise wenigstens zwei Reihen von kugelförmigen Wälzkörpern, insbesondere vier oder mehr Reihen von kugelförmigen Wälzkörpern.

Dabei hat es sich bewährt, dass wenigstens vier Reihen von kugelförmigen Wälzkörpern jeweils mit einem Tragwinkel gleich oder größer ist als 45° vorgesehen sind, wobei innerhalb einer Schnittebene quer zur Umfangsrichtung der Blattlagerbaugruppe die Verbindungslinien zwischen den vier Kugelmittelpunkten ein rechtwinkliges Viereck bilden, insbesondere ein Rechteck oder Quadrat.

Eine vorteilhafte Ausgestaltung der Erfindung besteht darin, dass das verzahnte Anschlusselement von dem unverzahnten Anschlusselement an einer seiner Stirnseiten und an wenigstens zwei Mantelflächen umgriffen wird. Damit ist es möglich, zwei Mantelflächen des verzahnten Anschlusselements zum Austausch von Kräften und/oder Drehmomenten zwischen beiden Anschlusselementen zu nutzen; gleichzeitig bleibt die nicht umgriffene Stirnseite des verzahnten Anschlusselements frei zum Austausch von Kräften und/oder Drehmomenten mit einem daran angeschlossenen Maschinen- oder Anlagenteil.

Eine weitere Optimierung erfährt die erfindungsgemäße Blattlagerbaugruppe durch in dem unverzahnten Anschlusselement kranzförmig verteilt angeordnete Befestigungselemente, beispielsweise in dessen Anschlussfläche mündende Bohrungen, insbesondere Sacklochbohrungen mit Innengewinde, welche vorzugsweise in einem der Verzahnung des verzahnten Anschlusselementes abgewandten Abschnitt angeordnet sind. Damit ist eine einfache und gleichzeitig auch höchst belastbare Anschlussmöglichkeit geschaffen. Eine Alternative zu verzahnten Sacklochbohrungen sind unverzahnte Durchgangsbohrungen.

Weitere Vorteile erhält man dadurch, dass die Laufbahn(en) für wenigstens eine Wälzkörperreihe der Hauptlagerung und/oder die Befestigungselemente, beispielsweise Sacklochbohrungen mit Innengewinde, durch Bearbeitung oder Formgebung eines gemeinsamen (Teil-) Körpers des unverzahnten Anschlusselements gebildet sind. Diese Maßnahme führt einerseits zu einem Höchstmaß an Präzision; andererseits können damit die Laufbahnen entlang ihres gesamten Umfangs von jeglichen Stoßstellen freigehalten werden, wodurch sich eine höhere Betriebsdauer erreichen lässt.

Eine weitere Konstruktionsvorschrift besagt, dass das unverzahnte Anschlusselement in seinem der Verzahnung abgewandten Querschnittsbereich einen etwa schürzenförmigen oder querschnittlich etwa L-oder gar C-förmigen oder T-förmigen Laufbahnabschnitt aufweist mit wenigstens einer, vorzugsweise unmittelbar eingearbeiteten Laufbahn für eine Wälzkörperreihe der Hauptlagerung. Dessen Querschnittsform richtet sich vor allem nach der Anzahl und Art der verwendeten Wälzkörperreihen. Beispielsweise würde bei einem ein- oder mehrreihigen Vierpunktlager eine schürzenförmige Gestalt ausreichen, während bei einer - stärker belastbaren - Rollenlagerung mit einer Radialreihe und zwei Axialreihen ein C-förmiger Querschnitt zu bevorzugen sein dürfte, oder gar ein T-förmig symmetrischer Querschnitt, woran sich weitere Laufbahnen für zusätzliche Wälzkörperreihen anordnen lassen.

Erfindungsgemäß kann der Querschnitt des unverzahnten Anschlusselements, insbesondere in seinem der Verzahnung zugewandten Querschnittsbereich, wenigstens einen kreisringscheibenförmigen Verbindungsabschnitt aufweisen, welcher die Stirnseite des verzahnten Anschlusselements umgreift. Diesem obliegt es vor allem, den die Getriebezahnräder aufnehmenden Getriebeabschnitt des unverzahnten Anschlusselements verdrehsicher und formstabil mit dessen Laufbahnabschnitt jenseits des verzahnten Anschlusselements zu verbinden.

Die Erfindung präferiert eine Ausführungsform dahingehend, dass das unverzahnte Anschlusselement in seinem der Verzahnung zugewandten Querschnittsbereich einen etwa schürzenförmigen oder querschnittlich etwa L-förmigen Getriebeabschnitt aufweist, der sich an den kreisringscheibenförmigen Abschnitt anschließt und die Getrieberäder umgreift oder aufnimmt. Die Getriebezahnräder sollten primär in Ausnehmungen des Verbindungsteils gelagert sein; ein schürzenförmiger Getriebeabschnitt würde die Getrieberäder an deren der Hauptdrehachse zugewandten Mantelfläche umgreifen und daher vor Eingriffen aus dieser Richtung ehr schützen, was besonders dann wichtig ist, wenn das Blattlager nicht durch Abdeckplatten vollkommen geschlossen, sondern mittenfrei ist. Bei einem L-förmigen Querschnitt verfügt das Blattlager zudem noch über einen ebenen, kreisringscheibenförmigen Abschnitt, der sich parallel zu dem ebenfalls ebenen, kreisringscheibenförmigen Verbindungsabschnitt erstreckt. In dem überlappenden Bereich dieser beiden ebenen Abschnitte sind die Getriebezahnräder derart angeordnet, dass deren Drehachse beide Abschnitte durchsetzt. Dadurch besteht die Möglichkeit, ein Getriebezahnrad in bzw. zwischen zwei zueinander ebenen Abschnitten zu lagern.

Aus montagetechnischen Gründen kann es vorteilhaft sein, wenn das unverzahnte Anschlusselement aus mehreren Teilen zusammengesetzt ist, beispielsweise aus wenigstens einem Laufbahnteil, einem Verbindungsteil und einem Getriebeteil. Da das unverzahnte Anschlusselement einerseits das verzahnte Anschlusselement an drei Seiten umgreift und andererseits noch die Getrieberäder lagern sollte, erhält es insgesamt eine sehr komplexe Gestalt, die infolge von Hinterschneidungen weder als Gussteil hergestellt werden kann noch mit einem vertretbaren Aufwand durch spanabhebende Bearbeitung. Diese komplexe Gestalt kann zur Vereinfachung ihrer Herstellung in einfachere Teile untergliedert werden, welche aus einfachen Grundkörpern durch spanabhebende Bearbeitung angefertigt oder sogar als Gussteile hergestellt werden können.

Im Rahmen einer ersten Ausführungsform der Erfindung weist der Getriebeabschnitt einen etwa L-förmigen Querschnitt auf mit einem rundum laufenden Hohlraum zur gemeinsamen Aufnahme aller Getrieberäder. Bei dieser Ausführungsform hat der Getriebeabschnitt selbst zwar eine besonders einfache Geometrie; zusammen mit dem Verbindungsabschnitt ergibt sich jedoch eine Hinterschneidung, welche eine einstückige Herstellung als Gussteil erschwert oder gar unmöglich macht. Werden aber der Getriebeabschnitt und der Verbindungsabschnitt getrennt voneinander hergestellt und anschließend zusammengefügt, so kann man ob der einfachen Geometrie jedes der beiden Teile als Gussteil herstellen oder aus einfachen Grundkörpern durch spanabhebende Bearbeitung und/oder Zusammenfügen erhalten. In letzterem Falle kann der Getriebeabschnitt mit L-förmigem Querschnitt bspw. durch Verschweißen eines ebenen, kreisringscheibenförmigen Teils mit einem schürzenförmigen oder zylindermantelförmigen Teil angefertigt werden.

Eine andere Ausführungsform der Erfindung ist zeichnet sich dadurch aus, dass der Getriebeabschnitt einen etwa in azimutaler Richtung variierenden Querschnitt aufweist mit mehreren, voneinander durch Zwischenstege abgeteilten Hohlräumen zur Aufnahme je eines Getrieberades. Für die dynamische Funktion der Blattlagerbaugruppe sind diese Stege zwar nicht wesentlich; sie können jedoch die Formstabilität steigern, indem winklig zueinander verlaufend Ringabschnitte gegeneinander versteift werden. Derartige Stege entstehen einfach dadurch, dass die einzelnen Abteile, worin jeweils ein einzelnes Getrieberad Platz findet, mit gegenseitigen Abständen in einen massiven Ringkörper vorzugsweise in axialer Richtung hineingebohrt werden. Dabei ist darauf zu achten, dass diese Bohrungen in radialer Richtung nicht mittig auf dem betreffenden Ring platziert werden, sondern zu derjenigen Mantelfläche hin verschoben, welche der Verzahnung des verzahnten Anschlusselements am nächsten liegt, und zwar wenigstens so weit, dass der verbleibende Abstand der Bohrungsmittelachse zu der betreffenden Mantelfläche kleiner ist als der Radius der Bohrung. Dies hat zur Folge, dass die einzelnen Abteile jeweils zu der betreffenden Mantelfläche hin offen sind und also einen kämmenden Eingriff zwischen den Getriebezahnrädern einerseits und der Verzahnung des verzahnten Anschlusselements andererseits ermöglichen.

Weiterhin ist vorgesehen, dass an dem Verbindungsabschnitt oder -teil ein um eine Nebendrehachse ringförmig geschlossener Randbereich zur Abstützung einer Radlagerung für das betreffende Getrieberad vorgesehen ist. Dabei kann der/das vorzugsweise kreisringscheibenförmige Verbindungsabschnitt oder -teil als Lagerungsschild dienen, um das betreffende Radlager optimal abzustützen.

Es hat sich bewährt, dass an dem Getriebeabschnitt oder -teil ein um eine Nebendrehachse ringförmig geschlossener Randbereich zur Abstützung einer (weiteren) Radlagerung für das betreffende Getrieberad vorgesehen ist. Dort kann ein (zweites) Radlager angeordnet werden, welches dem Getrieberad besondere Stabilität verleiht.

Als Radlager finden bevorzugt (Radial-) Kugellager Verwendung, insbesondere Vierpunkt-Kugellager. Diese bieten den Vorteil, dass mit nur einer einzigen Wälzkörperreihe alle Arten von Kräften und Momenten aufgenommen werden könne, also insbesondere Radial- und Axialkräfte und Kippmomente.

Zur Realisierung der Radlager greift die Erfindung zurück auf vorzugsweise vorgefertigte Wälzlager mit eigenen Laufbahnringen, deren äußerer Laufbahnring in den betreffenden, ringförmig geschlossenen Randbereich des unverzahnten Anschlusselements eingesetzt ist. Diese Maßnahme dürfte sich in Anbetracht der vergleichsweise kleinen Durchmesser der Getrieberäder in den meisten Fällen als einfacher darstellen als die Einarbeitung der Laufbahnen in das Anschlusselement selbst.

Zur Festlegung des äußeren Laufbahnrings eines Radlagers sieht die Erfindung einen aufgesetzten und an dem unverzahnten Anschlusselement fixierten Befestigungsring mit einem gegenüber dem dortigen Radlager verjüngten Innenquerschnitt vor, der in axialer Richtung an dem unverzahnten Anschlusselement festgelegt ist, bspw. in ein rundum laufendes Innengewinde eingeschraubt ist. Aufgrund seines verjüngten Innendurchmessers umgreift ein solcher Befestigungsring jedenfalls den Außenring eines Wälzlagers in axialer Richtung und kann diesen daher in axialer Richtung zu einer zweiten, vorzugsweise gleichartigen Lagerung pressen.

Sofern ein innerer Laufbahnring eines Radlagers in einer entlang der Peripherie einer Stirnseite des betreffenden Getrieberades rundum laufenden Auskehlung aufgenommen ist, so lässt sich damit das Getrieberad nicht nur in radialer Hinsicht führen, sondern auch in axialer Richtung positionieren.

Zwischen der Mantelfläche eines Getrieberades und dessen beiden Stirnseiten sollte je eine rundum laufende Auskehlung vorgesehen sein, wobei nur der radial erweiterte Mantelbereich zwischen den beiden Auskehlungen verzahnt ist. Jedes in einer derartigen Auskehlung platzierte Lager kann dabei Radialkräfte auf den verjüngten Radabschnitt übertragen sowie Axialkräfte in Richtung des radial erweiterten Mittelbereichs. Um einen Kontakt mit einer dortigen Verzahnung zu vermeiden, können die ebenen Flächen dieser Auskehlungen mit einer axialen Abstufung versehen sein, so dass der radial erweiterte und verzahnte Umfangsbereich gegenüber der betreffenden Auskehlung in axialer Richtung zurückweicht.

Zum Anschluss eines Drehantriebs an einem Getrieberad und/oder zum Austausch von Drehmomenten zwischen dem Getrieberad und dem daran angeschlossenen Drehantrieb oder Maschinen- oder Anlagenteil sieht die Erfindung in einer Stirnseite eines Getrieberades wenigstens ein Anschlusselement vor, insbesondere ein Sackloch, dessen Innenquerschnitt entlang seines Umfangs wenigstens eine radiale Erweiterung oder Verjüngung aufweist, so dass ein drehfester Anschluss möglich ist. Wenn ein solches einen genormten bzw. standardisierten Querschnitt aufweist, ist ein Anschluss beliebiger Drehantriebe möglich, soweit diese über eine genormte Abtriebswelle verfügen. Dabei können verschiedene Getrieberäder mit unterschiedlichen Querschnittsformen des Anschlusselements bereitgehalten und bei Bedarf eingesetzt werden, um eine Übereinstimmung zu den jeweils anzuschließenden Aggregaten zu erzielen. Zur Ausbildung eines Drehschlusses kann dabei bspw. eine rundumlaufende Verzahnung vorgesehen sein, oder auch eine in axialer Richtung verlaufende Nut, worin ein Keil einlegbar ist, etc.

Ein an dem unverzahnten Anschlusselement konzentrisch zu jeder Nebendrehachse vorgesehenes oder festlegbares Sockelelement dient zur Verankerung des Gehäuses eines drehfest an das Getrieberad angeschlossenen Drehantriebs oder Maschinen- oder Anlagenteils. Zu diesem Zweck einer insbesondere verdrehfesten Verankerung kann das Sockelelement radial vor oder zurück springende Elemente aufweisen und/oder Schraubanschlüsse od. dgl.

Der Bereich radial innerhalb eines ringförmigen Anschlusselements lässt sich durch eine Abdeckung verschließen, vorzugsweise etwa in der Ebene der jeweiligen Anschlussfläche. Dadurch kann mit geringstem Aufwand ein größerer Hohlraum geschaffen werden, der als Reservoir für das verwendete Schmiermittel dienen kann. Daher lässt sich ein großer Schmiermittelvorrat einfüllen, und demzufolge können die Intervalle, innerhalb derer das Schmiermittel ausgetauscht werden muss, größer gewählt werden als ohne einen solchen Vorrat.

Ferner entspricht es der Lehre der Erfindung, dass die Verzahnung des verzahnten Anschlusselements sich an dessen radial innen liegender Mantelfläche befindet. Dadurch ist es möglich, die Ritzel radial innerhalb des verzahnten Anschlusselements anzuordnen, wodurch die Anordnung besonders platzsparend ist, bei gleichzeitig hohem Übersetzungsverhältnis. Außerdem können dabei die beiden großen, ringförmigen Anschlusselemente selbst die eher kleineren Getrieberäder bzw. -ritzel schützend umgeben, so dass selbst bei extrem rauhen Einsatzbedingungen eine Beschädigung kaum zu befürchten ist.

Um mehrere Drehantriebe um die mittige Hauptdrehachse der erfindungsgemäßen Blattlagerbaugruppe verteilt anzuordnen und somit eine möglichst symmetrische Kraft- und Momenteneinleitung sicherzustellen, kann dabei ein gedachter, alle Nebendrehachsen bzw. Symmetriemittelpunkte der Ritzel verbindender Polygonzug ein vorzugsweise gleich- oder regelmäßiges Vieleck ergeben, welches sich mit steigender Anzahl der Drehantriebe einer Ringform stärker annähern kann als einem Viereck.

Insbesondere verfügt jedes dieser derartigen Ritzel über standardisierte Abmessungen, insbesondere um eine rasche Austauschbarkeit im Betrieb zu gewährleisten. Die Stärke des Gehäuseteils kann dort, wo die Ritzel positioniert sind, mindestens 5 mm betragen, meist jedoch in etwa zwischen 50 mm bis 150 mm, bei großen und schweren Bauformen auch bis zu 250 mm. Es sollten mehr zwei oder mehr derartige Ritzel vorhanden sein, beispielsweise drei oder vier oder mehr derartiger Ritzel, welche vorzugsweise konzentrisch und symmetrisch um die Mittenachse der WKA angeordnet sind. Zudem sind diese Ritzel zueinander gleichmäßig beabstandet, wobei der Abstandswinkel mit Winkel PHI bezeichnet wird. Wenn beispielsweise vier derartige Ritzel vorhanden wären, welche gleichmäßig voneinander beabstandet wären, so würde dieser Abstands- oder Zentrumswinkel jeweils 90° betragen.

Die vorhandenen Ritzel sollten erfindungsgemäß identische Abmessung und Bauform besitzen, insbesondere eine zylindrische Bauform mit einem Außendurchmesser von mindestens 100 mm, beispielsweise von 200 mm oder mehr, insbesondere zwischen 200 mm bis 400 mm, bei einer Bauhöhe von mindestens 100 mm, beispielsweise von 250 mm oder mehr, insbesondere von etwa 300 mm bis 500 mm.

Das mindestens einseitig geschlossene Gehäuse mit einer zentralen Öffnung um dessen Mittenachse kann einstückig oder mehrstückig ausgeführt sein, wobei die mehrstückige Ausgestaltungsform mindestens eine Abdeckplatte enthält, die mit dem Gehäuseteil verbunden werden kann. Diese mindestens eine Abdeckplatte kann von geringerer Stärke sein als das Gehäuseteil, insbesondere von geringerer Stärke als 50 mm, wobei diese Abdeckplatte mit dem Gehäuseteil lösbar verbunden sein kann, insbesondere mittels Schraubverbindungen. Erfindungsgemäß denkbar ist aber auch, dieses Teil aus einem Guss zu gestalten, sodass diese Platte von dem Gehäuseteil gänzlich unlösbar ist und vielmehr als eine Einheit ausgebildet ist.

Die erfindungsgemäße Blattlagerbaugruppe kann auf einer ersten Seite über eine zentrale, beispielsweise ringförmige, Öffnung verfügen, wobei diese Öffnung in der Regel zentrisch um eine Mittenachse angeordnet ist. Auf der gegenüberliegenden Seite, einer zweiten Seite, insbesondere auf der Gegenseite, kann eine zweite Abdeckplatte parallel zur Gehäusekontur der ersten Seite, vorhanden sein. Diese zweite Abdeckplatte kann dabei von geringerer Stärke sein als das Gehäuseteil, beispielsweise von geringerer Stärke als 50 mm, und diese Abdeckplatte kann mit dem Gehäuseteil lösbar verbunden sein, oder aber auch insbesondere mittels Schraubverbindungen lösbar verbunden sein. Auch hier ist es erfindungsgemäß möglich, alles aus einem Guss zu gestalten.

Erfindungsgemäß sollte der zur Hauptdrehachse parallele Abstand zwischen den beiden äußeren Gehäusestirnseiten höchstens das doppelte Maß betragen wie die im Innenraum zwischen beiden Gehäusestirnseiten gemessene, axiale Bauhöhe jedes Ritzels beträgt. Beispielsweise oder insbesondere ist diese erfindungsgemäße ringförmige Energieübertragungsbaugruppe zwischen den beiden äußeren Gehäusekonturen etwa zwischen etwa 200 mm und etwa 1000 mm breit.

Die Nabe eines vorzugsweise um eine etwa in Windrichtung verlaufende Achse rotierenden Windrades einer erfindungsgemäßen Windkraftanlage ist mit einem Rotorblatt über eine erfindungsgemäße Blattlagerbaugruppe gekoppelt, an welche zwei oder mehr Drehantriebe angeschlossen werden können, um den Anstellwinkel des Rotorblattes einzustellen, wobei die Blattlagerbaugruppe zwei rotationssymmetrische, vorzugsweise ringförmige Anschlusselemente aufweist mit jeweils wenigstens einer ebenen Anschlussfläche zur drehfesten Ankopplung an die Nabe der Windkraftanlage einerseits und an das betreffende Rotorblatt andererseits, wobei die beiden Anschlusselemente derart ausgerichtet sind, dass ihre Symmetrieachsen koaxial zueinander verlaufen und ihre bevorzugten Anschlussflächen einander abgewandt sind, wobei sich ferner zwischen den beiden Anschlusselementen ein Spalt befindet, worin wenigstens eine Wälzlagerung als Hauptlager angeordnet ist zur Lagerung der beiden Anschlusselemente aneinander, drehbeweglich um eine Hauptlagerdrehachse, welche der gemeinsamen Symmetrieachse beider Anschlusselemente entspricht, und wobei wenigstens eine Mantelfläche eines Anschlusselements mit einer rundum laufenden Verzahnung versehen ist, und wobei das unverzahnte Anschlusselement einen der Verzahnung des verzahnten Anschlusselementes zugewandten Abschnitt aufweist mit einem oder mehreren, zu der Verzahnung hin offenen Hohlräumen für die Aufnahme verzahnter Getrieberäder, wobei in dem unverzahnten Anschlusselement für jedes Getrieberad eine stirnseitige Öffnung vorgesehen ist, wodurch dessen drehfeste Ankopplung an je einen Drehantrieb möglich ist, sowie damit etwa in einer axialen Flucht wenigstens ein geschlossener Ringbereich zur Abstützung einer in axialer Richtung zwischen den Anschlussflächen der beiden Anschlusselemente angeordneten Lagerung für das betreffende Getrieberad als dessen Radlager, so dass das betreffende Getrieberad um eine gegenüber der Hauptlagerdrehachse exzentrisch versetzte, aber dazu etwa parallele Nebendrehachse rotiert und mit der Verzahnung des verzahnten Anschlusselements kämmt.

Eine solche Anordnung ist in etwa gleichbedeutend mit einer Gesamtanordnung, bestehend aus einer Windkraftanlage, und einer erfindungsgemäßen, zylinder- oder ringförmigen Blattlagerbaugruppe zur Übertragung von Energie aus mechanischen Kräften und Momenten von einer Antriebsseite zu einer Abtriebsseite als Teil des Windrades dieser Windkraftanlage, wobei weder die Blattlagerbaugruppe noch die Energieanlage über zentrale Getriebe- oder Sonnenräder verfügt, welche die Haupt- oder Mittenachse überlagern und sich um Selbige drehen; eine solche Gesamtanordnung umfasst:

- ein, zwei oder mehrere, um die Haupt- oder Mittenachse herum verteilt angeordnete und jeweils separat an dem Gehäuseteil auf der Abtriebsseite ortsfest, jeweils um ihre eigene Symmetrieachse drehbar gelagerte Ritzel mit jeweils gleichen Abständen zur Mittenachse,
- wenigstens eine zwei- oder mehrreihige Hauptlagerung nach Art eines Großwälzlagers, beispielsweise beinhaltend zylindrische Wälzkörper in querschnittlich zueinander orthogonal orientierten Laufbahnen,
- ein Gehäuse, wovon die erfindungsgemäße Blattlagerbaugruppe mindestens einseitig umschlossen ist, insbesondere zum Schutz der Hauptlagerung vor äußerlichen Einflüssen, gegebenenfalls unter zusätzlicher Anbringung mehrerer, etwa parallel zueinander ausgerichteter Abdeckplatten,
- wobei das Hauptlager mindestens einen ersten Hauptwälzlagerring sowie mindestens einen zweiten Hauptwälzlagerring aufweist, wobei der ein Hauptwälzlagerring die Kräfte und (Dreh-) Momente aufnimmt und auf die Abtriebsseite überträgt,
- und wobei mittels direkt an einem Hauptwälzlagerring gelagerten, verzahnten und kämmenden Getrieberädern eine drehfeste Kopplung des verzahnten Hauptwälzlagerrings mit einem oder mehreren Drehantrieben zur Einstellung des Rotorblatt-Anstellwinkels erfolgt.

Die Erfindung zeichnet sich weiterhin aus durch Mittenfreiheit und Kompaktheit der Gesamtanordnung. Dabei ist vor allem eine niedrige Bauhöhe L des erfindungsgemäßen Getriebes bei gleichzeitig großem Durchmesser D vorteilhaft, bspw. mit einem Verhältnis $D / L \geq 3$, wobei der Durchmesser D vorzugsweise etwa 3 m entspricht oder größer ist, während die Bauhöhe L vorzugsweise etwa 0,5 m entspricht oder kleiner ist.

Die Ritzel verfügen jeweils auf mindestens einer Stirnseite über eine zentrale konzentrische Öffnung, die geeignet ist um, eine zentrisch angeordnete Welle passgenau aufzunehmen und rotationssteif zu befestigen, mit der Absicht Drehbewegungen übertragen zu können. Jedes dieser Ritzel weist an mindestens einer Stelle seiner Längserstreckung, insbesondere jedoch an zwei unterschiedlichen Orten (oben und unten), jeweils Befestigungsmöglichkeiten vor, wo die Anbringung je eines Ritzellagers möglich ist, insbesondere als Wälz- oder Drehverbindungslager. Diese Befestigungsmöglichkeiten können bspw. durch Auskehlungen mit einem verjüngten Durchmesser gebildet sein, worauf sich ein Wälzlager reibschlüssig aufschieben lässt.

Wichtig im Sinne dieser Lagerung(en) ist es, dass diese Lagerungen die Zähne des Ritzels weder berühren noch kontaktieren, sondern von den Zähnen des jeweiligen Ritzels ausreichend beabstandet sind.

Die vorhandenen Ritzel sind erfindungsgemäß jeweils direkt gekoppelt oder koppelbar, insbesondere jeweils über eine separate Welle gekoppelt oder koppelbar, mit mindestens einer an dem Gehäuseteil befestigbaren oder einbringbaren oder anflanschbaren Drehantriebseinheit, wie beispielsweise einem Hydraulikmotor oder einem Elektromotor. Im Rahmen einer besonderen Ausgestaltungsform der Erfindung ist diesen Drehantriebseinheiten gemein, dass sie als Hydraulikmotoren zum Schlucken von Fluidmedien, beispielsweise von hoch- oder niedrigviskosen Fluidmedien, insbesondere Öl, ausgestaltet sein können.

Jede dieser Drehantriebseinheiten sollte das gleiche Gewicht aufweisen, einerseits um eine rasche Austauschbarkeit im Betrieb zu gewährleisten und somit die Servicefähigkeit zu erhöhen, und andererseits damit das Windrad keine Unwucht erhält.

Die Drehantriebe sind mittels einer Trägerkonstruktion, insbesondere mittels eines Flansches, derartig an dem Gehäuseteil anbringbar oder einbringbar oder anflanschbar, dass eine Abtriebswelle des betreffenden Drehantriebs durch die Mitte dieser Trägerkonstruktion hindurchgesteckt werden kann und sich sodann bis zu dem betreffenden Getrieberad erstrecken kann, zwecks drehfester Kopplung mit jenem, in der Absicht, um auf diese Weise den Anstellwinkel des betreffenden Rotorblattes beeinflussen zu können.

Die soeben genannte Trägerkonstruktion an sich ist direkt auf dem Gehäuseteil anbringbar oder einbringbar oder anflanschbar, sodass die Befestigung mit herkömmlichen Verbindungselementen gestaltet werden kann, gegebenenfalls mittels wieder lösbaren Verbindungselementen wie insbesondere Schraubverbindungen und gegebenenfalls unter zusätzlicher Verwendung geeigneter Dichtungsmaterialien zur Abdichtung vorhandener Fluidmedien.

Jeweils zwischen einer Trägerkonstruktion und dem jeweiligen Ritzel kann mindestens ein Ring eingelegt sein, insbesondere ein Klemmring zur Lagestabilisierung der Ritzellagerung oder auch ein Dichtring zur Abdichtung. Dabei ist dessen Ringmittelpunkt gleich mit der Rotationsachse der vom Ring umfassten, wie vorgenannte beschriebenen, Abtriebswelle des betreffenden Drehantriebs.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1 einen Schnitt durch eine erfindungsgemäße Blattlagerbaugruppe, parallel zu deren Hauptdrehachse, teilweise abgebrochen;

Fig. 2 eine der Fig. 1 entsprechende Darstellung einer anderen Ausführungsform der Erfindung;

Fig. 3 eine der Fig. 1 entsprechende Darstellung einer abermals abgewandelten Ausführungsform der Erfindung;

Fig. 4 eine der Fig. 1 entsprechende Darstellung einer wiederum anderen Ausführungsform der Erfindung;

Fig. 5a das Detail V aus Fig. 4 entsprechend einer anderen Ausführungsform der Erfindung;

Fig.5b das Detail V aus Fig. 4 entsprechend einer noch anderen Ausführungsform der Erfindung;

Fig. 6a eine Draufsicht auf ein Getrieberad der Blattlagerbaugruppe aus Fig. 1;

Fig. 6b das Getrieberad aus Fig. 6a in einer perspektivischen Ansicht sowie entlang seiner Rotationsachse aufgeschnitten;

Fig. 6c einen Schnitt durch die Fig. 6a entlang der Ebene A - A;

Fig. 7 die Blattlagerbaugruppe aus Fig. 1 in einer perspektivischen Ansicht von einer Stirnseite her gesehen, wobei die betreffende Abdeckplatte sowie ein Teil des unverzahnten Anschlusselements entfernt ist, um einen Blick in das Innere des Getriebes zu ermöglichen;

Fig. 8 die Blattlagerbaugruppe aus Fig. 1 in einer perspektivischen Ansicht von der Abtriebsseite her gesehen, wobei die Schnittlinie B - B eingezeichnet ist, längs welcher der Schnitt von Fig. 1 erfolgt ist;

Fig. 9 eine der Fig. 8 entsprechende Darstellung, wobei der Zentrumswinkel PHI eingetragen ist;

Fig. 10 eine der Fig. 9 entsprechende Darstellung einer wiederum anderen Ausführungsform der erfindungsgemäßen Blattlagerbaugruppe;

Fig. 11 eine der Fig. 9 entsprechende Darstellung einer nochmals abgewandelten Ausführungsform der Erfindung; sowie

Fig. 12 eine der Fig. 1 entsprechende Darstellung einer wiederum abgewandelten Ausführungsform der Erfindung.

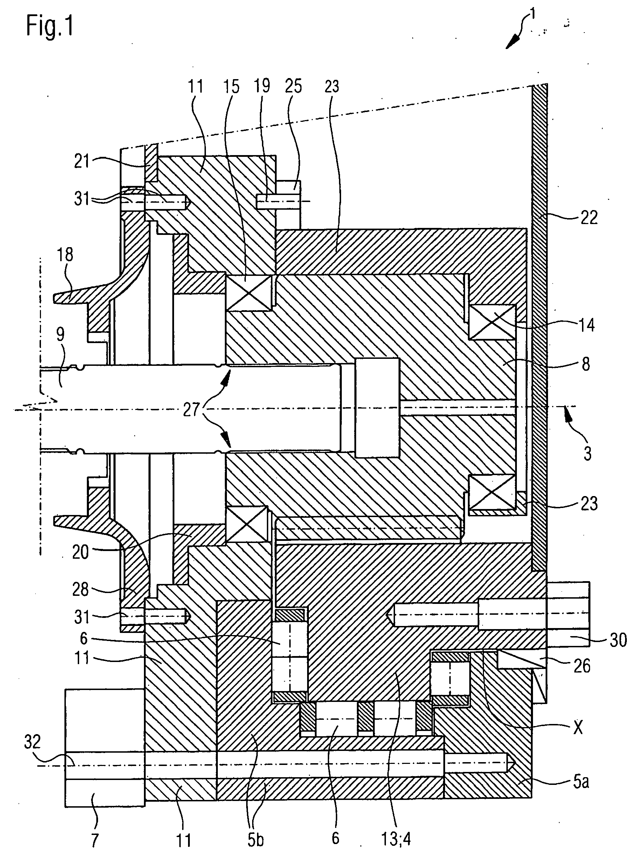

Die Figuren 1 bis 4 zeigen zwar verschiedene Ausführungsformen einer erfindungsgemäßen Blattlagerbaugruppe 1, 1', 1", $1^{(3)}$, welche sich jedoch in ihrer Funktion nicht wesentlich voneinander unterscheiden, sondern nur hinsichtlich ihres Aufbaus in einigen Details, die später erläutert werden sollen. Zunächst wird die allen drei Ausführungsformen gemeinsame Wirkungsweise dargelegt.

In den Fig. 1 bis 4 ist die betreffende Blattlager- oder Getriebebaugruppe 1, 1", $1^{(3)}$ jeweils anhand eines abgebrochenen Schnittes entlang der Hauptdrehachse 2 wiedergegeben; ein Vergleich der drei Darstellungen lässt sofort deren hohe Ähnlichkeit erkennen.

Aus Gründen der Übersichtlichkeit ist in den Fig. 1 bis 4 die Nabe 7, woran das Blattlager 1 verankert ist, nur schematisch angedeutet, ebenso wie auch ein Rotorblatt 30 des Windrades der betreffenden Windkraftanlage, dessen Energie über das Blattlager 1, 1', 1", $1^{(3)}$ auf die Nabe übertragen wird und von dort auf angeschlossene Kraftwandlungseinheiten, bspw. in Form von Generatoren, Aggregaten, oder einer (Hydraulik-) Pumpe, verteilt wird.

Weiterhin sind Drehanschlüsse 17 vorgesehen, womit der Anstellwinkel des betreffenden Rotorblattes 30 verändert werden kann.

Wie die Fig. 1 bis 4 zeigen, ist eine erfindungsgemäße Blattlagereinheit 1,1', 1", 1$^{(3)}$ als einbaufertige Baugruppe konzipiert, als Teil einer Windkraftanlage mit einem Windrad und an dessen Nabe 7 angekoppelten Rotorblättern 30. Die Blattlagerbaugruppe 1, 1', 1", 1$^{(3)}$ hat im Wesentlichen einen rotationssymmetrischen Aufbau. Ihre wesentlichen Bestandteile erstrecken sich ringförmig um eine Hauptdrehachse 2. In deren Bereich ist die Blattlagerbaugruppe 1, 1', 1", 1$^{(3)}$ allenfalls durch zwei zueinander etwa parallele Abdeckplatten 21, 22 abgeschlossen, in deren Zwischenraum jedoch normalerweise keine funktionstechnisch relevanten Teile angeordnet sind; bevorzugt dient dieser Zwischenraum nur als Reservoir für ein Schmiermittel.

Somit ist die Blattlagereinheit 1, 1', 1", 1$^{(3)}$ im Wesentlichen mittenfrei und kann in besonderen Fällen auch ohne die Abdeckplatten 21, 22 betrieben werden, so dass durch eine dann bestehende, zentrale Öffnung 10 um die Hauptdrehachse 2 herum Kabel oder sonstige Leitungen hindurchgeführt werden könnten. Dies kann besonders bei Windkraftanlagen bedeutsam sein, da solchermaßen kurzfristig ein Zugang von dem rückwärtigen Bereich der Gondel durch die Nabe 7 hindurch bis in ein Rotorblatt 30 hinein geschaffen ist, so dass bei entsprechend großen Anlagen Techniker dieselbe kurzfristig inspizieren können.

Nach Entfernen der Abdeckplatten 21, 22 verbleibt ein ringförmiges Gehäuseteil, welches dem Anschluss an ein vorzugsweise feststehendes Anlagenteil dient, bspw. an die Nabe 7 des Windrades einer Windkraftanlage, und welches aus diesem Grund als Anschlusselement 5 bezeichnet werden soll. Allerdings umfasst dieses ringförmige Anschlusselement mehrere, jeweils ringförmige Abschnitte 5, 5', 11 und 23, welche im eingebauten Zustand starr miteinander verbunden sind und somit eben zu einem einzigen Ring vereinigt sind.

Zum Anschluss an ein Anlagenteil, insbesondere an die Nabe 7 der Windkraftanlage, verfügt das Anschlusselement 5 über eine ebene Anschlussfläche in Form einer äußeren Stirnseite, die in Fig. 1 links unten dargestellt ist. Diese Anschlussfläche liegt im eingebauten Zustand großflächig und plan an einer ebensolchen planen Anschlussfläche des betreffenden Maschinenteils, insbesondere der Nabe 7, an und erfährt dadurch eine entsprechende Ausrichtung. Um diese Position zu fixieren, sind in der Anschlussfläche kranzförmig um die Hauptdrehachse 2 verteilt angeordnete Befestigungselemente in Form von zu der Hauptdrehachse 2 parallelen Bohrungen, entweder Durchgangsbohrungen oder zumindest teilweise mit Innengewinde versehene Sacklochbohrungen vorgesehen. Durch Einstecken oder Einschrauben von Maschinenschrauben, Gewindebolzen od. dgl. und Anziehen oder Kontern derselben wird die Verbindung zwischen dem Gehäuse des Blattlagers 1, 1', 1", 1$^{(3)}$ und dem Maschinenbauteil, insbesondere der Nabe 7, hergestellt.

Diese Verbindung findet an einer Stirnseite des Blattlagers 1, 1', 1", 1$^{(3)}$ statt; an der anderen Stirnseite ist eine Verbindung mit dem Rotorblatt 30 der Windkraftanlage herzustellen. Da das Rotorblatt 30 sich gegenüber der Nabe 7 drehen können soll, wird das Rotorblatt 30 nicht an dem das Getriebegehäuse bildenden Anschlusselement 5 festgelegt, sondern an einem davon getrennten Anschlusselement 4, 4".

Auch das Anschlusselement 4, 4" hat eine ringförmige Struktur, ist jedoch bevorzugt nicht aus mehreren Stücken zusammengesetzt, sondern zu einem einzigen, ringförmigen Stück integriert. Auch dieses Anschlusselement 4, 4" verfügt über eine ebene Anschlussfläche in Form einer äußeren Stirnseite, die jedoch der Anschlussfläche des Anschlussrings 5, 5a, 5b abgewandt und in Fig. 1 rechts dargestellt ist, etwa im unteren Drittel der Zeichnung. Diese Anschlussfläche liegt im eingebauten Zustand großflächig und plan an einer ebenso planen, rückwärtigen Anschlussfläche eines Rotorblattes 30 an und trägt dabei zu einer entsprechenden Ausrichtung des Rotorblattes 30 bei. Um diese Position zu fixieren, sind auch in der Anschlussfläche des zweiten Anschlusselements 4, 4" kranzförmig um die Hauptdrehachse 2 verteilt angeordnete Befestigungselemente in Form von zu der Hauptdrehachse 2 parallelen Bohrungen, insbesondere ganz oder teilweise mit Innengewinde versehene Sacklochbohrungen, vorgesehen. Durch Einschrauben von Maschinenschrauben, Gewindebolzen od. dgl. und Anziehen derselben wird die Verbindung zwischen dem Anschlusselement 4, 4" des Blattlagers 1, 1', 1", 1$^{(3)}$ und dem rückwärtigen Ende eines Rotorblattes 30 der Windkraftanlage hergestellt.

Die leichte Verdrehbarkeit des inneren Anschlusselementes 4, 4" gegenüber dem gehäuseartigen Anschlusselement 5, 5a, 5b resultiert aus einem Spalt X zwischen beiden Anschlusselementen 4, 5. Damit andererseits das innere Anschlusselement 4, 4" ggf. auch die Aufgabe einer exakten Ausrichtung des Rotorblattes 30 des Windrades entsprechend einem gewünschten Blatt-Anstellwinkel übernehmen kann, muss es seinerseits an dem getriebeartigen Gehäuseteil 5 eine präzise Führung erfahren. Dieses übernimmt eine in dem Spalt X zwischen beiden Getriebeteilen 4, 5 angeordnete Hauptlagerung in Form eines ein- oder vorzugsweise mehrreihigen Wälzlagers mit Laufbahnen 29 an beiden Anschlusselementen 4, 5, woran Wälzkörper 6, 6', 6$^{(3)}$ entlang rollen.

Da an den Blattlagern eines Windrades neben dem erwünschten Antriebsdrehmoment auch eher unerwünschte, aber unvermeidliche Axial- und Radialkräfte sowie Kippmomente auftreten, hat die Wälzlagerung 6, 6', 6$^{(3)}$,29 einen robusten Aufbau. Aus Gründen der Tragfähigkeit werden vorzugsweise rollenförmige Wälzkörper 6, 6' verwendet. Es sind mehrere, insbesondere mindestens drei Reihen von derartigen rollenförmigen Wälzkörpern 6, 6' vorgesehen, bspw. eine Radialreihe, welche dafür sorgt, dass die Symmetrieachsen der beiden rotationssymmetrischen Anschlusselemente konzentrisch zueinander verlaufen, sowie wenigstens zwei Axialreihen, von welchen eine Druckkräfte überträgt, während die andere für Zugkräfte konzipiert ist; Kippmomente werden von beiden gleichermaßen aufgenommen und an die Nabe 7 abgegeben, wodurch eine dauerhafte Parallelausrichtung der beiden Anschlusselemente bzw. eine koaxiale Flucht ihrer beiden Symmetrieachsen sichergestellt ist.

Um jeweils Laufbahnen für die Radialreihe und die beiden Axialreihen zur Verfügung zu stellen, ist eines der beiden Anschlusselemente 4, 5 als sog. "Nasenring" ausgebildet mit einem entlang seiner dem Spalt X zugewandten Mantelfläche rundum laufenden, bundartigen Erhebung 13. Wie Fig. 1 erkennen lässt, hat diese bundartige Erhebung 13 einen etwa rechteckigen Querschnitt, mit - in axialer Richtung betrachtet - je einer ebenen Ober- und Unterseite und einer zylindrischen Außenseite. Während letztere als Laufbahn(en) 29 für die Radiallagerung(en) dienen, läuft an der ringförmigen Ober- und Unterseite je eine der beiden Axialreihen entlang.

Zur Abstützung all dieser Wälzkörperreihen muss eine gleich Anzahl von Laufbahnen 29 auch an dem jeweils anderen Anschlusselement 5, 4 vorgesehen sein. Dieses hat zu jenem Zweck etwa eine C-förmige Geometrie, sozusagen mit einer rundum laufenden Nut, in welche die bundartige Erhebung 13 des anderen Anschlusselements 4, 5 eingreift.

Aufgrund dieser Verschränkung ist es für die Montage der Anschlusselemente 4, 5 erforderlich, dass der Anschlussring 5, 5a, 5b mit C-förmiger Geometrie im Bereich des Nutgrundes unterteilt ist in einen oberen Ringabschnitt 5a' und einen unteren Ringabschnitt 5b'. Die Trennung kann bspw. entlang einer ebenen Fläche verlaufen, die sich bspw. am oberen oder unteren Ende der Radiallagerlaufbahn 29 befindet.

Der Spalt X erstreckt sich bis zu der Anschlussfläche des verdrehbaren Anschlusselements 4 und ist vorzugsweise mit Schmiermittel, insbesondere mit Schmierfett, gefüllt. Damit dieses Schmiermittel nicht entweichen kann, befindet sich im Bereich der Spaltmündung eine Dichtung 26.

Eben um enthaltenes Schmiermittel nicht entweichen zu lassen und/oder keine Schmutzpartikel eindringen zu lassen, ist die Blattlagerbaugruppe 1, 1', 1", 1$^{(3)}$ so weit als möglich gekapselt. Diesem Zweck dienen vor allem auch die Abdeckplatten 21, 22. Wie man der Fig. 1 entnehmen kann, fluchten die Außenseiten jeweils mit einer der beiden einander abgewandten Anschlussflächen der Blattlagerbaugruppe 1. Diese sind vorzugsweise in je eine rundum laufende Auskehlung des betreffenden Anschlusselements 4, 5 eingelegt und bspw. mittels Schrauben fixiert, bspw. mittels Senkkopfschrauben. Abgesehen von den weiter unten beschriebenen Drehanschlüssen für die Getrieberäder ist die Blattlagerbaugruppe 1 somit hermetisch abgeschlossen.

Wie man der Fig. 1 weiter entnehmen kann, ist im Bereich der Spaltmündung die dortige Anschlussfläche erhaben gegenüber der benachbarten Stirnseite des anderen Anschlusselements 5, damit bei einer Relativverdrehung dieser beiden Flächen unterschiedlicher Anschlusselemente 4, 5 die "unbeteiligte" Stirnseite nicht an dem an die Anschlussfläche angeschlossenen Anlagenteil entlangstreifen kann. Der Abstand L zwischen den beiden Anschlussflächen- und damit die Bauhöhe der Blattlagerbaugruppe 1, 1', 1", 1$^{(3)}$ - ist also etwas größer als die axiale Erstreckung des größeren bzw. höheren Anschlusselements 5.

Das bevorzugt an der Nabe 7 ortsfest zu verankernde Anschlusselement 5 besteht nicht nur aus den beiden Ringabschnitten 5a, 5b; 5a', 5b', sondern umfasst weiterhin ein etwa kreisringscheibenförmiges Verbindungsteil 11, an welchem die eigentliche Anschlussfläche GA angeordnet ist, und welches daher auf die der anderen Anschlussfläche GZ gegenüber liegende Stirnseite des Ringabschnitts 5b, 5b' aufgesetzt ist. In der Zeichnung gut zu erkennen ist die minimale Stärke SG des Verbindungsteils 11. Die Ringabschnitte 5a, 5b; 5a', 5b', 11 können bspw. durch gemeinsame Verschraubungen aneinander festgelegt sein.

Das kreisringscheibenförmige Verbindungsteil 11 übergreift die der Anschlussfläche GZ gegenüber liegende Stirnseite des anderen Anschlusselements 4 in einem Abstand, so dass sich der Spalt X dort fortsetzt, und überragt auch die dem rundum laufenden Bund- oder Lagerabschnitt 13 gegenüber liegende Mantelfläche des anderen Anschlusselements 4 in radialer Richtung.

Dieses Anschlusselement 4 ist an eben jener, dem Bund- oder Lagerabschnitt 13 abgewandten Mantelfläche mit einer rundum laufenden Verzahnung 12 versehen, welche der Einleitung der von den Drehantrieben 17 abgegebenen Steuerenergie dient. Diese Verzahnung 12 muss sich nicht über die gesamte Höhe des verzahnten Anschlusselements 4 erstrecken; es kann sich um eine Geradverzahnung, aber auch um eine Schrägverzahnung handeln.

Diese Steuerenergie der Drehantriebe 17 wird von ein oder vorzugsweise zwei oder mehreren, verzahnten Getrieberäder 8, 8", 8$^{(3)}$ aufgenommen, deren jeweilige mantelseitige Verzahnung 16 mit der Verzahnung 12 des verzahnten Anschlusselements 4 in kämmendem Eingriff steht und von diese antreibt oder stillsetzt, je nach der von einer Steuerung oder Regelung erzeugten Vorgabe für den Anstellwinkel. Im Allgemeinen wird der Durchmesser der Getriebezahnräder 8, 8", 8$^{(3)}$ deutlich kleiner sein als der Durchmesser der Verzahnung 12; aus diesem Grund ist es auch üblich, bei den Getriebezahnrädern 8, 8", 8$^{(3)}$ als den kleineren Zahnrädern von Ritzeln zu sprechen; dieser Begriff wird daher in diesem Text synonym zu Getriebe(zahn)rädern verwendet.

Um die von der Verzahnung 12 abgegriffene Energie möglichst definiert in die Blattlagerbaugruppe 1 einleiten zu können, sollten deren Positionen innerhalb des Gehäuses wohldefiniert sein; diese Positionen sollten einerseits möglichst gleich verteilt sein, damit die Nabe 7 dadurch keine Unwucht erfährt. Der präzisen Einhaltung dieser Positionen dienen Radlagerungen 14, 15 für die Getrieberäder 8, welche letztere um ihre jeweilige Nebendrehachse 3 drehbar,

13

ansonsten aber unverrückbar an dem unverzahnten Anschlusselement 5 lagern.

Wie Fig. 1 weiter zu entnehmen ist, gibt es bei der dargestellten Ausführungsform jeweils zwei derartige Radlagerungen 14, 15 pro Getrieberad 8, 8'', 8^(3) bzw. Ritzel, jeweils eine an dessen oberem Ende und eine an dessen unterem Ende.

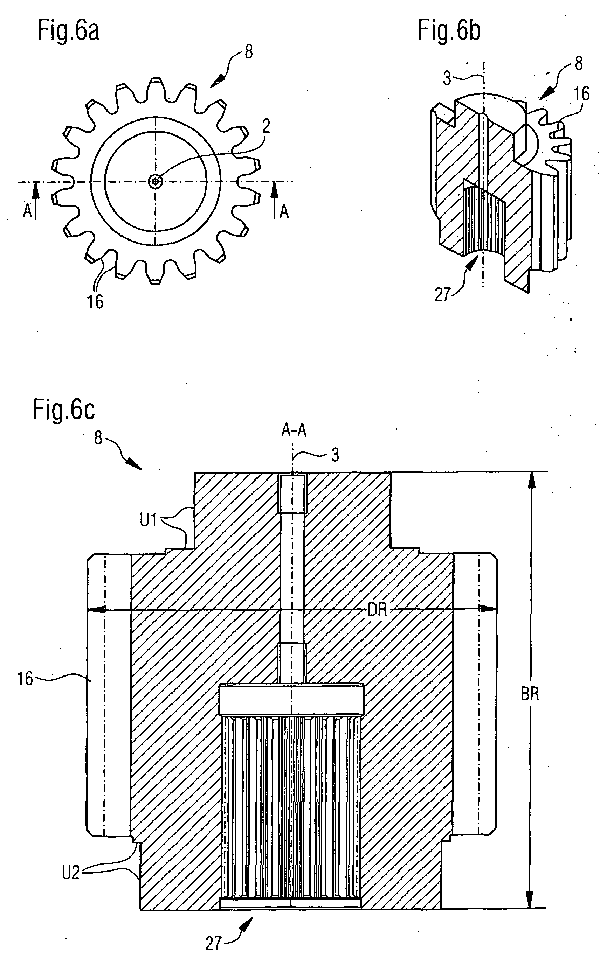

Die Geometrie eines Getrieberades 8 ist in den Fig. 6a bis 6c wiedergegeben. Man erkennt deutlich den prinzipiell zylindrischen Grundkörper mit zwei ebenen Stirnseiten und je einer Auskehlung U1, U2 zwischen jeder der beiden Stirnseiten und dem Mantel zur Aufnahme je eines Radlagers 14, 15. Zwischen den beiden Auskehlungen U1, U2 ist der gerade, ursprünglich rein zylindrische Mantel mit einer rundum laufenden Verzahnung 16 versehen, je nach Art der Verzahnung 12 am verzahnten Anschlusselement 4 in Form einer geraden oder schrägen Verzahnung. Um diese Verzahnung 16 vor Beschädigungen infolge einer Berührung mit den in die Auskehlungen U1, U2 eingesetzten Radlagern 14, 15 zu schützen, ist die jeweils ebene Ringfläche der beiden Auskehlungen U1, U2 mit einer kleinen Abstufung versehen, wobei der verzahnte Mantelflächenbereich 16 gegenüber der eigentlichen Auskehlung U1, U2 um die Höhe der Stufe zurückversetzt ist und also ein Abstand zwischen der Verzahnung 16 und den Radlagern 14, 15 eingehalten wird. Die Ritzellagerungen 14, 15 kontaktieren oder berühren daher die Verzahnungselemente 16 des Ritzels 8 nicht. Ebenso wenig treten die Radlagerungen 14, 15 mit den zahnförmigen Elementen 12 an dem verzahnten Anschlusselement 4 in Kontakt.

Eine der beiden Stirnseiten des Getrieberades 8 ist konzentrisch zu seiner Symmetrieachse 3 mit einem Anschluss 27 zur drehfesten Verbindung mit einer Welle 9 eines Drehantriebs 17, bspw. in Form eines Elektromotors oder Hydraulikmotors, versehen, wo die Steuerenergie für die Einstellung des Anstellwinkels eingeleitet werden kann. Bei dem Anschlusselement 27 handelt es sich vorzugsweise um eine zur Symmetrieachse 3 des Getrieberades 8 parallele Bohrung, deren Durchmesser etwa zwischen einem Fünftel und der Hälfte des Durchmessers DR des Getrieberades 8 einschließlich dessen Verzahnung 16 beträgt, insbesondere zwischen einem Viertel und einem Drittel des Durchmesser DR der Verzahnung 16. Dieser Durchmesser verjüngt sich etwa auf halber Höhe des Getrieberades 8 zu einem engen, vorzugsweise zur Symmetrieachse 3 koaxialen Kanal, welcher bspw. eine Entlüftung beim Einschieben einer Welle 9 od. dgl. in das Anschlusselement 27 bewirkt. Um zwischen einer eingesteckten Welle 9 eines anzuschließenden Drehantriebs 17 und dem Mantel der Anschluss-Bohrung 27 einen drehfesten Schluss auszubilden, hat eben dieser Bohrungsmantel keine vollständig rotationssymmetrische, insbesondere keine rein zylindrische Gestalt, sondern weist wenigstens einen radialen Vor- und/oder Rücksprung auf, worin ein Pendant an der eingesteckten Welle 9 oder ein weiteres Verbindungsteil formschlüssig eingreifen kann. Im vorliegenden Beispiel ist der Mantel der Anschluss-Bohrung 27 mit radial vorspringenden Zähnen und radial zurückweichenden Zahnlücken versehen, so dass eine mit einer komplementären Verzahnung versehene Welle nach Einstecken in die Anschluss-Bohrung 27 drehfest mit dem Getrieberad 8 gekoppelt ist.

In Fig. 1 ist weiter dargestellt, wie ein solches Ritzel bzw. Getrieberad 8 in das Getriebe 1 eingebaut ist. Hierzu dienen zunächst die beiden Radlager 14, 15, wofür bevorzugt vorfabrizierte oder vorkonfektionierte Wälzlager Verwendung finden. Es kann sich hierbei vorzugsweise um Kugellager handeln, beispielsweise um Radialkugellager oder Vierpunktkugellager. Bei kleinen bis mittelgroßen Blattlagerausführungen 1 kann eine einzige Wälzkörperreihe pro Radlager 14, 15 ausreichend sein, bei größeren oder stärker belasteten Blattlagerbaugruppen 1 kann es auch sinnvoll sein, mehrere Wälzkörperreihen pro Radlager 14, 15 vorzusehen. Dargestellt sind eine rotorblattseitige Radlagerung 14, und eine nabenseitige Radlagerung 15.

Während der jeweilige Innenring eines Radlagers 14, 15 der betreffenden Auskehlung U1, U2 unmittelbar anliegt, sind zur Abstützung des jeweiligen Außenrings an dem Verbindungsteil oder -abschnitt 11 und/oder an einem daran festgelegten oder ansetzenden Getriebeteil oder -abschnitt 23 in sich ringförmig geschlossene Kontaktflächen vorgesehen, worin der Außenring eingesetzt oder gar eingepresst wird.

Bei der Blattlagerausführungsform nach Fig. 1, wo das Getriebeteil 23 von dem Verbindungsteil 11 getrennt und nur mit jenem verschraubt ist, bspw. über einen an dem Getriebeteil 23 ansetzenden Flansch 25 und darin eingebrachte Verschraubungsbohrungen 19, kann das Getriebeteil 23 eine ringförmige Gestalt mit zwei Querschnittsabschnitten aufweisen, beispielsweise einem ersten, etwa schürzen- oder zylindermantelförmigen Abschnitt, welcher in Kontakt steht mit dem Verbindungsteil 11 und an jenem festgeschraubt ist, sowie einem zweiten, etwa kreisringscheibenförmigen Abschnitt, der mit der freien Kante des ersten Abschnitts in Verbindung steht, bspw. integral mit jenem zusammengeformt ist, bspw. gemeinsam mit jenem in einer Form erstarrt ist, oder der mit jenem verschweißt, verklebt, verschraubt oder auf sonstige Weise vereinigt ist. Insgesamt bilden die beiden Abschnitte zusammengenommen eine etwa L-förmige Querschnittsgeometrie, wie aus Fig. 1 ersichtlich.

Der kreisscheibenförmige Abschnitt des Getriebeteils 23 bildet zusammen mit dem Verbindungsteil 11 je eine Art Lagerschild jeweils eines der beiden Radlager 14, 15. Zur Herstellung der Lagersitze sind in diese beiden Teile 11, 23 für jedes Getrieberad 8 jeweils paarweise miteinander fluchtend Bohrungen eingebracht, mit hohlzylindrischen Innenseiten, worin die Außenringe mit ihren dazu komplementären, zylindrischen Außenseiten eingesetzt oder eingepresst sind.

Zur Erleichterung des Einbaus und ggf. auch der Demontage eines Getrieberades 8 kann ein Lagersitz in dem Getriebeteil 23 einen anderen, insbesondere kleineren Durchmesser aufweisen als der zugeordnete Lagersitz in dem Verbindungsteil 11. Außerdem kann einer der beiden Lagersitze, vorzugsweise der mit dem kleinere Durchmesser, in Fig. 1 der Lagersitz für das Radlager 14, durch einen radial nach innen vorspringenden Bund an seiner axialen Außenseite abgeschlossen sein, so dass sich eine axiale Anlagefläche zur axialen Abstützung des betreffenden Radlagers 14 - und damit auch des darin gelagerten Getrieberades 8 - ergibt. Eine Abstützung in der entgegengesetzten Axialrichtung wird durch einen Klemmring 20 bewirkt, welcher bspw. in ein an der Innenseite der Bohrung in dem Verbindungsteil 11 oberhalb des Lagersitzes für das dortige Radlager 15 eingearbeitetes, die Nebendrehachse 3 umschließendes Innengewinde eingeschraubt werden kann; anstelle einer Verschraubung kann der Klemmring 20 auch festgeschweißt oder -geklebt sein. Da sein Innendurchmesser kleiner ist als der Außendurchmesser des betreffenden Radlagers 15, wird dieses in axialer Richtung fest eingeklemmt und dadurch das Getrieberad 8 in Position gehalten, derart, dass eine Verdrehung desselben um die betreffende Nebendrehachse 3 seine einzig zugelassene Bewegung ist.

Bei der in eine Anschluss-Bohrung 27 eingesteckten Welle handelt es sich um die Abtriebswelle eines Drehantriebs 17, bspw. in Form eines Elektromotors oder eines Hydraulikmotors. Um das Gehäuse des angeschlossenen Drehantriebs 17 an einem Mitdrehen mit der Abtriebswelle zu hindern, ist eine Verankerungsmöglichkeit in Form eines zu der betreffenden Nebendrehachse 3 konzentrischen Sockelelements 18 vorgesehen, welches seinerseits an dem Verbindungsteil oder -abschnitt 11 festgelegt ist, bspw. mittels einen Befestigungsflansch 28 an seinem Außenumfang durchgreifender Verschraubungen 31. Das Sockelelement 18 kann radiale Vor- oder Rücksprünge aufweisen und/oder Schraubanschlüsse, woran der angeschlossene Drehantrieb 17 drehfest verankert werden kann.

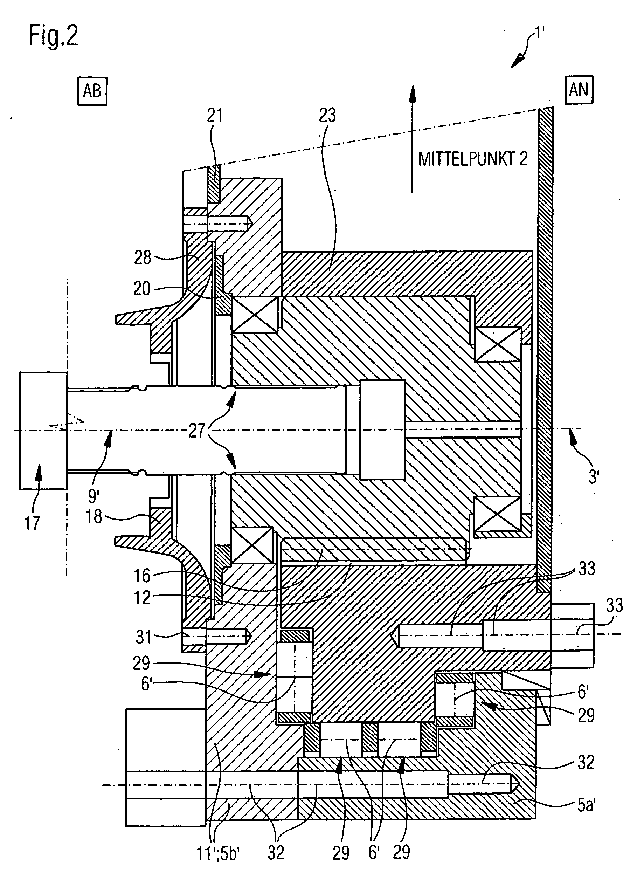

Die Blattlagerausführungsform 1' nach Fig. 2 unterscheidet sich von der oben beschriebenen einerseits dadurch, dass gemäß der Fig. 2 eine Laufbahn 29 des Hauptlagers, nämlich jene für die obere Axialrollenreihe 6', nicht an einem eigenen Laufbahnteil 5a', 5b' des unverzahnten Anschlusselements 5 vorgesehen ist, sondern an dem Verbindungsteil 11 selbst. Wie ein Vergleich von Fig. 1 mit Fig. 2 zeigt, kann dadurch die Geometrie des Verbindungsteils 11 weiter vereinfacht werden, indem dessen Gestalt auf eine nahezu reine Scheibenform reduziert wird.

Dadurch ist es andererseits möglich, die verbleibenden Laufbahnen 29 des Hauptlagers an dem unverzahnten Anschlusselement 5 an einem einzigen Laufbahnabschnitt 5a' zusammenzufassen, so dass das unverzahnte Anschlusselement 5 bei dieser Ausführungsform nur aus wenigen, nämlich drei Teilen besteht, nämlich einem Laufbahnteil 5a', einem Verbindungsteil 11 und einem Getriebeteil 23.

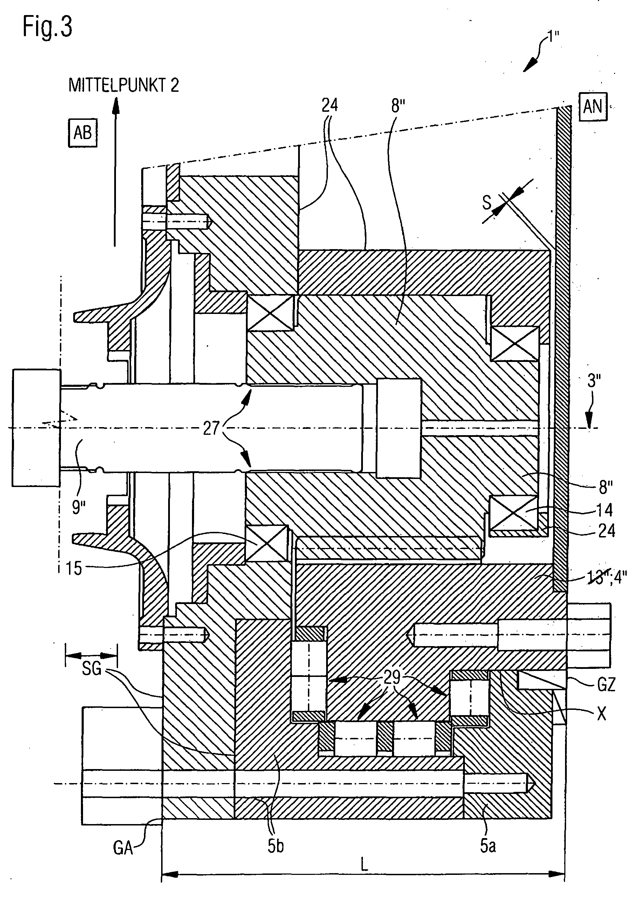

Bei der Blattlagerausführungsform 1" nach Fig. 3 hat dagegen eine andere Vereinfachung Platz gegriffen: Hier wurde das Verbindungsteil 11 mit dem Getriebeteil 23 zu einem neuen, einstückigen Verbindungs- und Getriebeteil 24 zusammengefasst bzw. integriert.

Während dabei der dem ursprünglichen Verbindungsteil 11 entsprechende Verbindungsabschnitt des integrierten Verbindungs- und Getriebeteils 24 keine substantielle Änderung erfahren hat, sind bei dessen Getriebeabschnitt zwei unterschiedliche Varianten denkbar:

Dieser Abschnitt des integrierten Verbindungs- und Getriebeteils 24 könnte zum Einen etwa den selben Querschnitt aufweisen wie die zuvor beschriebenen Ausführungsformen, also aus einem schürzen- oder zylindermantelfömigen Teil einerseits und einem kreisringscheibenförmigen Teil andererseits bestehen. Dadurch verfügt das integrierte Teil 24 über zwei ebene, zueinander parallele Abschnitte, worin zu jedem Getrieberad 8" je ein Lagersitz für dessen beide Radlager 14, 15 eingearbeitet ist.

Bei einer anderen Bauart könnte der Getriebeabschnitt des integrierten Verbindungs- und Getriebeteils 24 massiver ausgeführt sein, also bspw. den Hohlraum bzw. Kehlungsbereich zwischen dem schürzenförmigen und dem kreisringscheibenförmigen Abschnitt mehr oder weniger komplett erfüllen. Um in diesem Falle Platz für die Getrieberäder 8" zu schaffen, müssten die Aufnahmeräume für jene in diesen massiven Ringkörper eingearbeitet, insbesondere eingebohrt werden. Während also in der ersten, zuvor beschriebenen Bauartvariante alle Getrieberäder 8" in einem gemeinsamen, rundum laufenden Hohlraum bzw. Kehlungsbereich aufgenommen sind, wird bei der letzteren Bauvariante für jedes Getrieberad 8" ein eigener Hohlraum geschaffen, welcher von den benachbarten durch den stehengebliebenen Teil des ursprünglich massiven Getriebeabschnitts gleichsam wie durch Stege voneinander abgetrennt ist. Diese einzelnen Abteile sind jedoch allesamt zu der Verzahnung 12 des verzahnten Anschlusselements 4 hin offen. Der Vorteil dieser Ausführungsform besteht einerseits in einer erhöhten Steifigkeit der Anordnung, weil die zwischen den Abteilen verbleibenden Stege den Getriebeabschnitt gegenüber dem Vebindungsabschnitt aussteifen und dadurch beider Formstabilität verbessern; andererseits kann das Einbringen von Bohrungen in den gemeinsamen Verbindungs- und Getriebekörper 24 möglicherweise einfacher bewerkstelligt werden als die Anfertigung eines hinterschnittenen Bereichs zwischen zwei ebenen, aber gegeneinander versetzten Abschnitten des betreffenden Körpers 24, was jedenfalls die Herstellung als Gussteil mit einer mehrfach verwendbaren Form nahezu ausschließt.

Auch bei der Blattlager-Ausführungsform 1" nach Fig. 3 besteht das unverzahnte Anschlusselement 5 aus drei Teilen, nämlich zwei Laufbahnteilen 5a, 5b und einem integrierten Verbindungs- und Getriebeteil 24. Würde man die Ausführungsformen gemäß Fig. 2 und 3 miteinander kombinieren, so könnte das Anschlusselement 5 weiter vereinfacht werden und bestünde dann nur noch aus zwei Teilen, nämlich aus einem Laufbahnteil 5a und aus einem integrierten Verbindungs- und Getriebeteil 24.

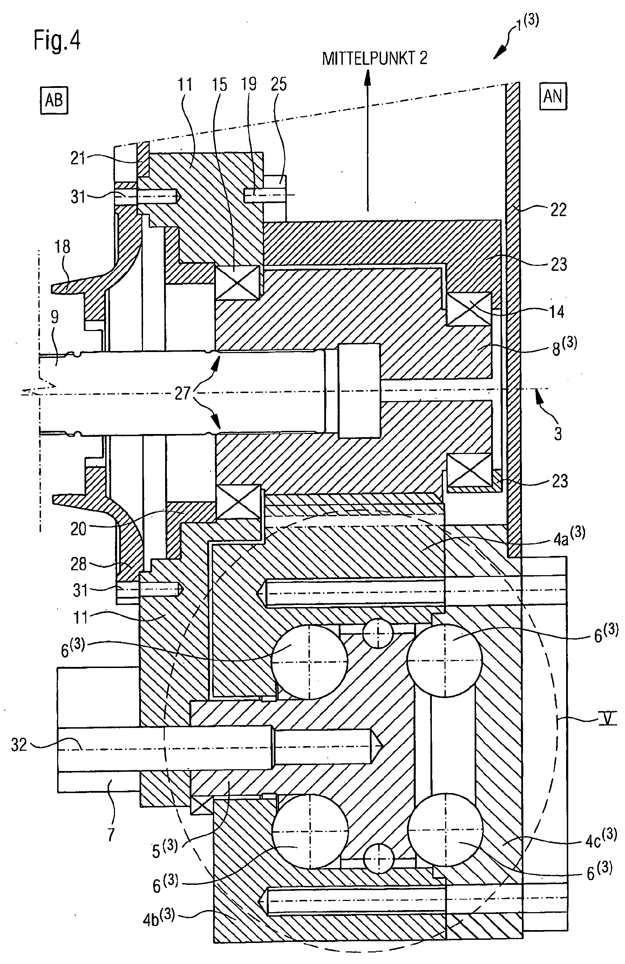

Eine wiederum andere Ausführungsform eines erfindungsgemäßen Blattlagers 1$^{(3)}$ ist in Fig. 4 dargestellt. Diese unterscheidet sich von der Ausführungsform nach Fig. 1 vor allem hinsichtlich der Hauptlagerung. Dabei ist das Grundprinzip - eine insgesamt mehrreihige Lagerung mit wenigstens je einer Wälzlagerreihe zur Übertragung von axialen Druckkräften und von axialen Zugkräften sowie mit wenigstens einer Wälzlagerreihe zur Übertragung von Radialkräften - ähnlich, jedoch auf andere Form praktisch umgesetzt. Einerseits verwendet das Blattlager 1$^{(3)}$ kugelförmige Wälzkörper 6$^{(3)}$ anstelle von Rollen. Andererseits sind für die Übertragung von axialen Druck- und Zugkräften jeweils zwei Reihen von Kugeln 6$^{(3)}$ vorgesehen; diese Kugelreihen 6$^{(3)}$ stehen untereinander jedoch nicht in unmittelbaren Kontakt, sondern sind jeweils voneinander beabstandet. Vorzugsweise befindet sich jedoch jeweils ein Paar von Kugelreihen 6$^{(3)}$ - insbesondere jeweils ein Paar von Kugelreihen 6$^{(3)}$ für die Übertragung von axialen Druckkräften, ein Paar für die Übertragung von axialen Zugkräften und ein Paar für die Übertragung von Radialkräften - auf einem gleichen axialen Höhenniveau. Bevorzugt liegt die Ebene des Kugelreihenpaares für die Übertragung von Radialkräften zwischen den Ebenen der Kugelreihenpaare für die Übertragung von axialen Druckkräften, vorzugsweise etwa mittig zwischen beiden letzteren. Wenn andererseits die radialen Abstände je einer Kugelreihe 6$^{(3)}$ der beiden axialen Kugelreihenpaare von der Hauptdrehachse gleich groß sind, bilden in einem Querschnitt durch die beiden ringförmigen Anschlusselemente die Mittelpunkte der vier Kugelreihen 6$^{(3)}$ für die Übertragung von Axialkräften ein rechtwinkliges Viereck, insbesondere ein Rechteck oder Quadrat. Die kugelförmigen Wälzkörper 6$^{(3)}$ der vier Kugelreihen für die Übertragung von Axialkräften haben vorzugsweise jeweils den selben Durchmesser, der entsprechend der üblichen Anforderungen an ein Blattlager größer ist als der Durchmesser der Wälzkörper 6$^{(3)}$ für die Übertragung von Radialkräften.

Wie man Fig. 4 weiter entnehmen kann, hat in diesem Fall das unverzahnte Anschlusselement 5$^{(3)}$ einen etwa T-förmigen Querschnitt, dessen Sockel mit der Platte 11$^{(3)}$ integriert oder an jener befestigt ist, beispielsweise angeschraubt, insbesondere mittels Schrauben 32, während sich die beiden Hälften des T-Querbalkens in radial entgegengesetzten Richtungen von dem Kopf des vertikalen T-Sockels auskragen, wie in Fig. 4 zu sehen. Diese beiden, radial auskragenden Hälften des T-Querbalkens tragen die Laufbahnen für die kugelförmigen Wälzkörperreihen 6$^{(3)}$, insbesondere jeweils drei derartige Laufbahnen, eine an der Unterseite, eine an der Oberseite und eine an der Stirnseite der betreffenden T-Querbalkenhälfte. Während die Kugelreihe 6$^{(3)}$ an der Stirnseite der T-Querbalkenhälfte für die Übertragung von radialen Kräften vorgesehen ist, also einen Tragwinkel von weniger als 45° aufweist, dient die Kügelreihe 6$^{(3)}$ an der Oberseite der T-Querbalkenhälfte zur Übertragung von axialen Druckkräften und die die Kugelreihe 6$^{(3)}$ an der Unterseite der T-Querbalkenhälfte zur Übertragung von axialen Zugkräften. Also kann jede T-Querbalkenhälfte sowohl Radialkräfte als auch axiale Zug- und Druckkräfte übertragen. Die beiden T-Querbalkenhälften - welche vorzugsweise spiegelbildlich zur Längsachse des vertikalen T-Balkens sind - verdoppeln daher die Tragkraft des Lagers gegenüber einer bspw. L-förmigen Querschnittsanordnung und schaffen überdies eine gegenseitige Redundanz.

Für die Aufnahme dieses querschnittlich T-förmigen, unverzahnten Anschlusselements ist in dem verzahnten Anschlusselement als Pendant eine rundumlaufende Vertiefung vorgesehen mit ebenfalls etwa T-förmigem, aber größerem Querschnitt, so dass zwischen beiden Elementen ein Spalt verbleibt, worin die verschiedenen Wälzkörper 6$^{(3)}$ Platz finden. Infolge dieser querschnittlich T-förmigen Ausnehmung kann der Querschnitt des verzahnten Anschlusselements auch als "U-förmig" bezeichnet werden.

Dabei bildet die obige, rundum laufende Vertiefung in dem verzahnten Anschlusselement infolge ihres T-förmigen Querschnitts Hinterschneidungen, welche den Zusammenbau des erfindungsgemäßen Blattlagers 1$^{(3)}$ erschweren. Um die beiden Anschlusselemente dennoch zusammenfügen zu können, ist das unverzahnte Anschlusselement 5$^{(3)}$ aus mehreren, jeweils ringförmigen Abschnitten zusammengefügt, nämlich einem etwa ebenen Mittelteil und zwei davon in der selben Richtung auskragenden, etwa zylindrischen Seitenteilen, welche die beiden Schenkel des U-förmigen Querschnitts darstellen.

Die Laufbahnen für die Kugeln 6$^{(3)}$ sind querschnittlich gewölbt, vorzugsweise konkav gewölbt, insbesondere entlang von kreisförmigen Bahnen. Die Laufbahnen für die axiale Zugkraftübertragung folgen der betreffenden Kreisbahn jeweils über einen Zentrumswinkel von 90° oder mehr, bezogen auf den Mittelpunkt der jeweiligen Kugel 6$^{(3)}$; daraus ergibt sich im Allgemeinen ein relativ großer Schmiegebereich.

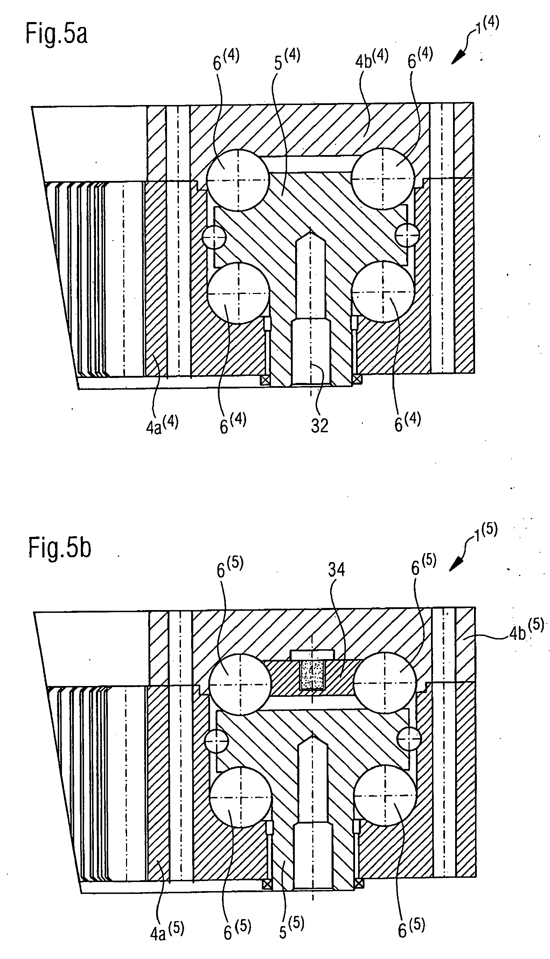

Die Gestalt der Laufbahnen für die axiale Druckkraftübertragung hängt von der Gestaltung der freien Stirnseite des querschnittlich T-förmigen, unverzahnten Anschlusselements ab. Bei der Ausführungsform gemäß Fig. 5 ist diese relativ flach ausgebildet. Da die Laufbahnen darin nur wenig vertieft sind, ergibt sich ein Schmiegebereich von weniger als 90°; demgegenüber befindet sich die zugeordnete Laufbahn des verzahnten Anschlusselements im. Bereich des Übergangs von einem ebenen Teil der inneren Berandungsfläche der querschnittlich T-förmigen Ausnehmung in einen zylindermantelförmigen Teil derselben, wo sich ohne weiteres ein Schmiegebereich von 90° oder mehr realisieren lässt.

Ein Nebeneffekt der unterschiedlichen Laufbahngestalten für die Kugelreihen 6$^{(3)}$ zur axialen Druckkraftübertragung ist ein vergleichsweise breiter, horizontaler Spaltabschnitt zwischen den beiden Kugelreihen für die axiale Druckkraftübertragung.

Die Ausführungsform einer Blattlagerbaugruppe 1$^{(4)}$ nach Fig. 5a unterscheidet sich von der zuvor beschrie-

benen Blattlagerbaugruppe $1^{(3)}$ nur im Bereich dieses horizontalen Spaltabschnittes, welcher bei der Fig. 5a schmäler ist als bei Fig. 4, wobei gleichzeitig die Laufbahnen in dem unverzahnten Anschlusselement tiefer ausgebildet und jeweils im Bereich einer Kante zwischen einem ebenen Oberflächenabschnitt und einem zylindrischen oder hohlzylindrischen Oberflächenabschnitt des unverzahnten Anschlusselements angeordnet sind. Infolgedessen erstrecken sich bei dieser Ausführungsform $1^{(4)}$ die Schmiegebereiche aller Laufbahnen für die axiale Druckkraftübertragung querschnittlich über einen Zentrumswinkel von wenigstens 90°, bezogen auf den Mittelpunkt der jeweiligen Kugel $6^{(4)}$.

Bei der Blattlagerbaugruppe $1^{(5)}$ gemäß Fig. 5b hat gegenüber dem Blattlager $1^{(3)}$ aus Fig. 4 eine andere Modifikation stattgefunden: Hier wurde die Gestalt der freien Stirnseite des querschnittlich T-förmigen, unverzahnten Anschlusselements nicht abgeändert. Stattdessen ist hier eine Einrichtung zur Verbesserung der Schmierung der Wälzkörper bzw. Kugeln $6^{(5)}$ für die axiale Druckkraftübertragung vorgesehen. Diese befindet sich innerhalb des horizontalen Spaltabschnittes zwischen verzahntem und unverzahntem Anschlusselement und soll die Schmierung der auf axialen Druck belastbaren Wälzkörper $6^{(5)}$ verbessern. Sie kann zu diesem Zweck an einem Anschlusselement festgeschraubt sein, vorzugsweise an dem verzahnten Anschlusselement. Diese Einrichtung umfasst bspw. eine mittels Distanzhülsen zu fixierende ebene Ringscheibe. Innerhalb des durch die Distanzhülsen vorgegebenen Hohlraums kann einerseits Schmierfett zur Verfügung gestellt werden, andererseits können dort ggf. auch ein oder mehrere, wellenförmig entlang eines Zylindermantels gebogene Bleche eingebracht sein, welche sich beim Überrollen durch die Kugeln $6^{(5)}$ verformen und dadurch das Schmiermittel, insbesondere Schmierfett, durchwalken und dabei in Bewegung setzen, wobei dieses aktiv an die Wälzkörper $6^{(5)}$ hin transportiert wird.

Für die Anordnung der Getrieberäder 8 in dem Getriebeteil 23 oder in dem integrierten Verbindungs- und Getriebeteil 24 gibt es verschiedene Möglichkeiten:

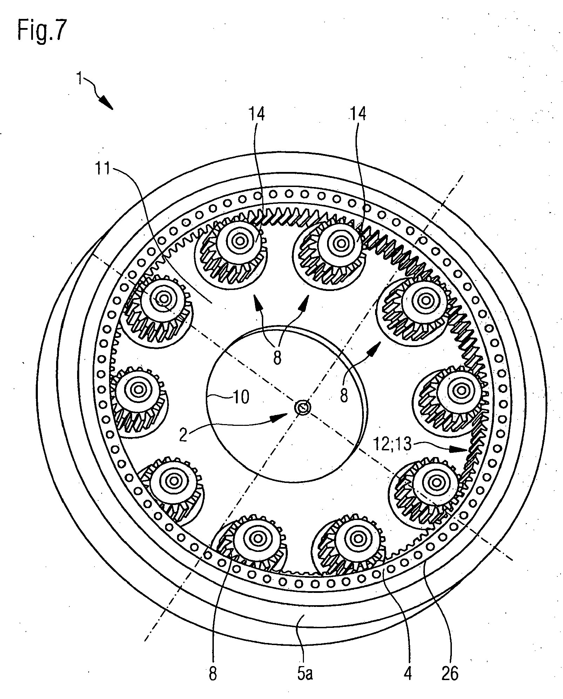

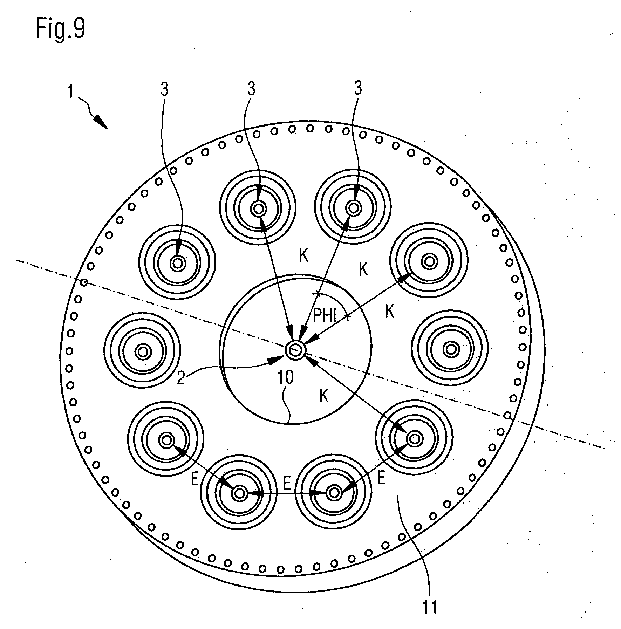

Wie die Figuren 7 bis 9 erkennen lassen, können die Getrieberäder 8 in gleichmäßigen Abständen über den Umfang verteilt angeordnet sein, bzw. unter gleichen Zentriwinkeln. Bei der in den Fig. 7 bis 9 dargestellten Blattlager-Ausführungsform 1 gibt es bspw. zehn äquidistant über den Umfang verteilte Getrieberäder 8, wobei benachbarte Getrieberäder 8 jeweils um einen Zentrumswinkel PHI von 36° voneinander beabstandet sind.

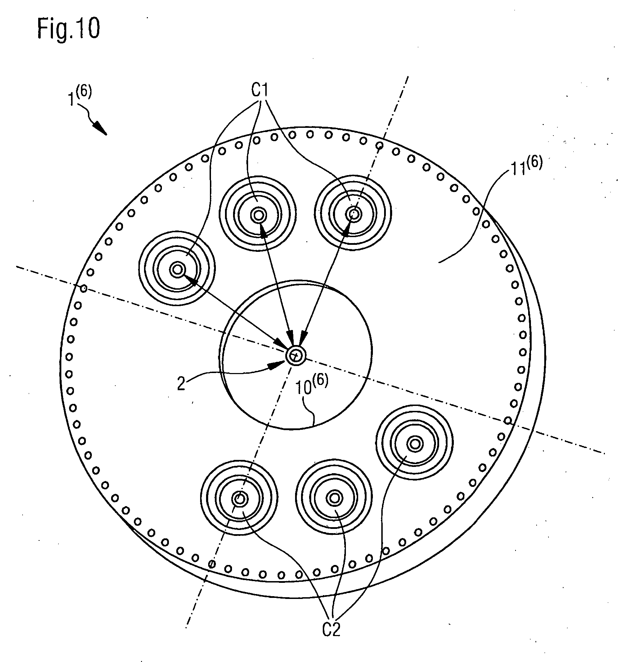

Bei der Blattlager-Ausführungsform $1^{(6)}$ nach Fig. 10 sind - innerhalb des ringförmigen Teils $11^{(6)}$ - jeweils mehrere Getrieberäder 8 zu Clustern zusammengefasst, wobei vorzugsweise zu jedem Getrieberad 8 ein anderes Getrieberad 8 bezüglich der Hauptdrehachse 2 diametral gegenüberliegend angeordnet ist, so dass sich insgesamt wieder eine symmetrische bzw. ausbalancierte Anordnung ergibt, die möglichst keine Unwucht aufweist.

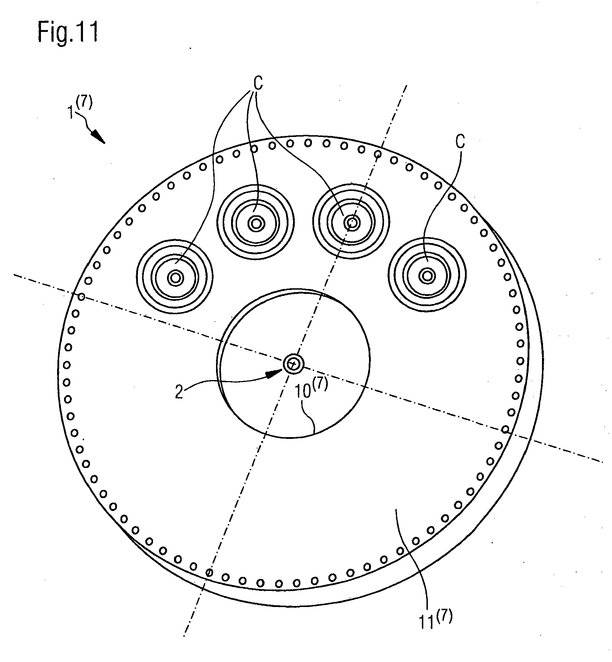

Sofern dies - beispielsweise bei besonders langsam laufenden Windrädern - eine gewisse Unwucht nicht stört oder durch Gegengewichte ausgeglichen werden kann, so sind auch asymmetrische Anordnungen bzw. Verteilungen der Getrieberäder 8 denkbar, wie anhand der Blattlagerbaugruppe $1^{(7)}$ bspw. in Fig. 11 dargestellt.

Alle Ritzel 8 haben gleiche Abmessungen hinsichtlich Bauteildurchmesser DR und Bauteilhöhe BR. Jedes dieser Ritzel 8 hat von der Mittenachse 2 in etwa den gleichen Abstand K, und jedes dieser Ritzel 8 wird direkt angetrieben, ohne Zwischen(getriebe)stufen, von der direkt am Anschlusselement 4 angebrachten Verzahnung 12.

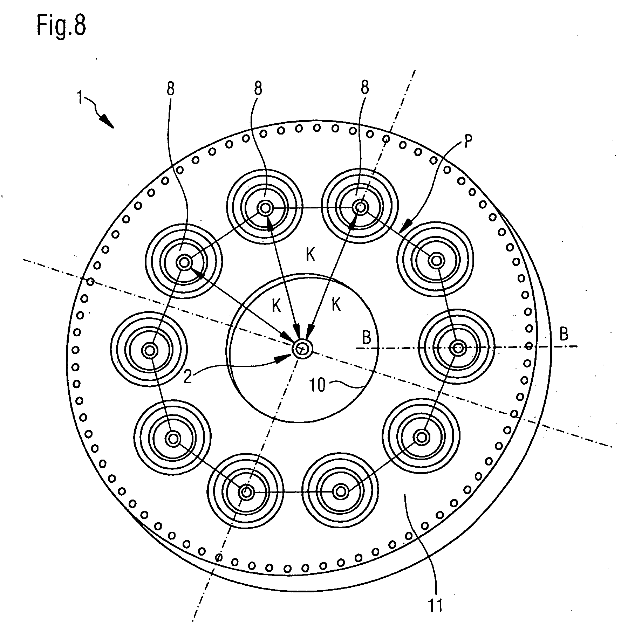

In Fig. 8 dargestellt ist der gedachte Polygonzug P zur Verbindung aller gedachten Nebendrehachsen bzw. Symmetriemittelpunkte 3 zwischen allen Ritzeln 8. Dieser Polygonzug ergibt ein in sich geschlossenes Vieleck P mit einer großen Eckenzahl P = 10. Diese symmetrische Anordnung wurde erfindungsgemäß gewählt, um eine möglichst gleichmäßige (konzentrische) Momentenbelastung um die Mittenachse zu ermöglichen, und ist unter diesem Gesichtspunkt besser als andere, asymmetrische oder eckigere Polygonzüge.

Es sind in allen Ausführungsformen der erfindungsgemäßen Gestaltung mehrere Ritzel 8 vorhanden. Bei der Ausführungsform gemäß den Figuren 7 bis 9 sind die Ritzel 8 konzentrisch und symmetrisch um die Hauptdrehachse bzw. Mittenachse 2 angeordnet sind und diese zueinander gleichmäßig beanstandet, unter gleicher Entfernung E. Wenn zehn Ritzel 8 vorhanden sind und diese jeweils gleiche Entfernungen E untereinander aufweisen, so ergibt sich ein Zwischenwinkel PHI von jeweils 36°.

Ebenso lässt sich aus der Zeichnung die Information entnehmen, dass für jeden angeschlossenen Drehantrieb 17 eine Trägerkonstruktion in Form eines Sockelelements 18 vorgesehen ist, welche(s) beispielsweise oder insbesondere mittels eines Flansches 28 so an dem Gehäuseteil 11 anbringbar oder einbringbar ist, dass eine zentrisch angeordnete Welle 9, mit der Absicht, Drehbewegungen übertragen zu können, durch die Mitte dieser Trägerkonstruktion 18 eingebracht werden kann. Diese zentrisch angeordnete Welle 9 rotiert dann um die betreffende Nebendrehachse 3, also um die gemeinsame Rotationsachse 3 von Getriebezahnrad 8 und Drehantrieb 17, mit der Absicht, jeweils einen Teil der Steuerenergie für den Anstellwinkel des betreffenden Rotorblattes auf das verzahnte Anschlusselement 13 zu übertragen.

Die Trägerkonstruktion 18 ist direkt auf dem Gehäuseteil 11 anbringbar oder einbringbar oder anflanschbar. Dessen Befestigung kann mit herkömmlichen Verbindungselementen 31 gestaltet werden, gegebenenfalls können auch wieder lösbare Verbindungselemente 31 wie Schraubverbindungen 31 verwendet werden. Gegebenenfalls, insbesondere Im Falle einer Schmierung mittels Öl, können gegebenenfalls zusätzlich geeignete Dichtungselemente und/oder -materialien zur Abdichtung gegenüber einem Entweichen des Schmiermittels zwischen dem Flansch 28 der Trägerkonstruktion 18 und dem Verbindungs- oder Gehäuseteil 11 verwendet werden. Ebenso ist es möglich, dass zwischen der angedeuteten Welle 9 und der Trägerkonstruktion 18 separate Wellen(dicht)ringe eingesetzt werden. Zwischen einer Trägerkonstruktion 18 und dem jeweiligen Ritzel 8 kann mindestens ein umlaufender Ring 20 vorhanden sein, beispielsweise ein Klemmring 20 zur Lagestabilisierung der Ritzellagerüng 15 oder auch ein Dichtring 20 zur zusätzlichen Abdichtung. Der Kreismittelpunkt eines solchen Ringes 20 ist sodann gleich der Nebendrehachse 3 der von dem betreffenden Ring 20 umgebenen Welle 9.

In den Fig. 7 bis Fig. 9 ist jeweils beispielhaft aufgezeigt, dass das im Wesentlichen mindestens an einer Seite geschlossene Gehäuse 11 eine erfindungsgemäße, zentrale Öffnung 10 um eine Mittenachse 2 hat, welche Mittenfreiheit der Gesamtanordnung 1 sicherstellt. Das Gehäuse 11 kann einstückig oder gar mehrstückig ausgeführt sein. Es kann eine schließende Abdeckplatte 21 vorhanden sein, siehe (vgl. Fig. 1 bis Fig. 4) die mit dem Gehäuseteil 11 verbunden werden kann. Diese Platte 21 kann von geringerer Stärke ist als das Gehäuseteil 11 sein, insbesondere von geringerer Stärke als 50 mm. Die Abdeckplatte 21 ist mit dem Gehäuseteil 11 lösbar verbunden, beispielsweise mittels Schraubverbindungen verbunden. Erfindungsgemäß wäre auch eine unlösbare Verbindung zwischen dem Verbindungs- oder Gehäuseteil 11 einerseits und der Platte 21 andererseits. Parallel zur sich senkrecht zur Mittenachse 2 erstreckenden Stirnseite GA, also auch parallel zu der Ebene, in welcher die beispielhaft vorbenannte Platte 21 angeordnet ist, kann auf einer zweiten Seite, insbesondere auf der Gegenseite, eine zweite Abdeckplatte 22 vorhanden sein. Diese zweite Abdeckplatte 22 kann ebenfalls von geringerer Stärke sein als das Verbindungs- oder Gehäuseteil 11, insbesondere von geringerer Stärke als 50 mm. Diese Abdeckplatte 22 ist jedoch nicht mit dem Verbindungs- oder Gehäuseteil 11 verbunden, sondern mit dem verzahnten Anschlusselement 4, und hält gegenüber dem Getriebeteil 23 oder dem integrierten Verbindungs- und Getriebeteil 24 einen Abstand S ein.

In Fig. 3 wird ein Abstand L zwischen der äußeren Gehäusekontur GA an der ersten Lagerstirnseite und der äußeren Gehäusekontur GZ an der zweiten, gegenüberliegenden, Lagerstirnseite definiert. Erfindungsgemäß ist dieser Abstand L höchstens das doppelte Maß im Verhältnis zu der Bauhöhe BR eines im Innenraum zwischen beiden Gehäusekonturen GA; GZ angeordneten Ritzels 8. Beispielgemäß beträgt die axiale Ausdehnung oder Höhe L der Getriebe-Gesamtanordnung 1 zwischen etwa 100 mm und höchstens 1000 mm, vorzugsweise weniger als 500 mm.

Der Spalt X zwischen den beiden Hauptwälzlagerringen 5; 4 wird abgedichtet durch ein herkömmliches Dichtungssystem 26 als ringförmiges Dichtungssystem. Werkstoffe hierfür sind beispielsweise die gängigen Materialien wie FPM, ECO, NBR, etc., wobei auch andere, ähnliche kautschukbasierte Werkstoffe, geeignet sind. Dieses System 26 beinhaltet mindestens einen umlaufenden Dichtungsring mit jeweils mindestens einer Dichtlippe. Mehrteilige Ausführungen, beinhaltend zwei oder mehr radial nebeneinander gelagerte Dichtungsringe, sind ebenfalls im Sinne der Erfindung denkbar.

Ferner könnte bspw. jedes einzelne der vorhandenen Ritzel 8 durch jeweils ein separates Ritzelgehäuse 23 teilweise umschlossen sein, insbesondere mindestens aber radial von Seiten der Mittenachse 2 umschlossen sein, so dass das jeweilige Ritzel 8 räumlich getrennt ist gegen körperliche Eingriffe aus dieser Richtung. Somit werden insbesondere nur Eingriffe auf Seiten der miteinander kämmenden Elemente 12, 16 ermöglicht, während Eingriffe in die Verzahnung des Ritzels 16 von Seiten der der Mittenachse 2 her durch dieses Ritzelgehäuse unterbunden sind.

In Fig. 1 wird als Beispiel gezeigt, dass das jeweilige Ritzelgehäuse bzw. Getriebeteil 23 an dem Verbindungteil 11 anschraubbar 19 oder anflanschbar 25; 19 ausgeführt sein kann; beispielgemäß könnte es aber auch angeschweißt werden (siehe Fig. 2), wodurch man sich Schrauben und einen breiten Flansch 25 einsparen würde.

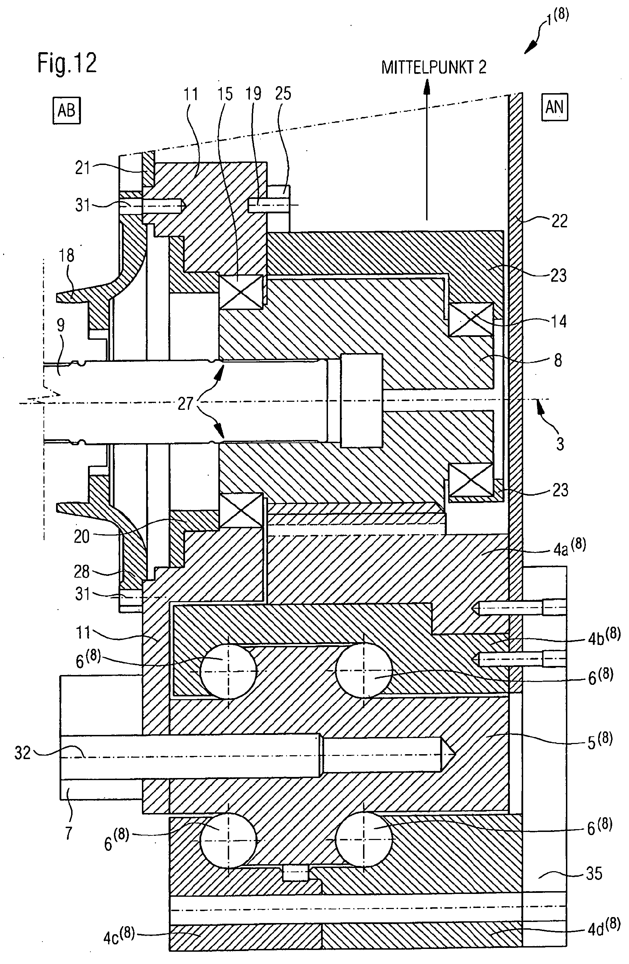

Bei der Ausführungsform nach Fig. 12 ist insbesondere zu erkennen, dass die Verzahnung des verzahnten Anschlusselements nicht unbedingt an dem selben Grundkörper angeordnet sein muss, welcher auch wenigstens eine Laufbahn aufweist. Vielmehr weist hier das Teil 13 keine Verzahnung auf, sondern hält eine Lücke zu dem Getrieberad 8 ein. Dennoch erstreckt sich die Abdeckplatte 22 bis zu dem Teil 13 und ist mit jenem verschraubt.

In der Lücke ist ein gesondertes Teil angeordnet, woran sich die eigentliche Verzahnung befindet. Dieses Teil wird ebenfalls mittels Schrauben an der Abdeckplatte 22 fixiert. Diese Ausführungsform hat den Vorteil, dass ein Verzahnungsabschnitt nicht rundum laufend ausgeführt sein muss, sondern beispielsweise auf einen Zentrumswinkel von etwa 90° bis 120° beschränkt sein kann. Es können also beispielsweise ein oder mehrere derartige Verzahnungssegmente vorgesehen sein.

## Bezugszeichenliste

| | | | |
|---|---|---|---|
| 1 | Blattlagerbaugruppe | 27 | Anschlusselement |
| 2 | Hauptdrehachse | 28 | Flansch |
| 3 | Nebendrehachse | 29 | Wälzkörperlaufbahn |
| 4 | Anschlusselement | 30 | Rotorblatt |
| 5 | Anschlusselement | 31 | Verschraubung |
| 6 | Wälzkörper | 32 | Befestigungselement |

(fortgesetzt)

| | | | |
|---|---|---|---|
| 7 | Nabe | 33 | Befestigungselement |
| 8 | Getrieberad | AN | Erste Montageseite |
| 9 | Anschlusswelle | AB | Zweite Montageseite |
| 10 | Zentrale Ausnehmung | BR | Ritzel-Bauhöhe |
| 11 | Abschnitt | C | Cluster |
| 12 | Verzahnung | C1 | Cluster |
| 13 | Abschnitt | C2 | Cluster |
| 14 | Radlager | DR | Ritzeldurchmesser |
| 15 | Radlager | E | Entfernung |
| 16 | Verzahnung | GA | Gehäusekontur |
| 17 | Stellantrieb | GZ | Gehäusekontur |
| 18 | Sockelelement | K | Radius |
| 19 | Verschraubung | L | Abstand |
| 20 | Klemmring | P | virtueller Polygonzug |
| 21 | Abdeckplatte | PHI | Zentrumswinkel |
| 22 | Abdeckplatte | S | Abstand |
| 23 | Abschnitt | SG | Gehäusestärke |
| 24 | Abschnitt | U1 | Umfang |
| 25 | Flansch | U2 | Umfang |
| 26 | Dichtung | X | Spalt |

## Patentansprüche

1. Blattlagerbaugruppe (1) für die verdrehbare Lagerung eines Rotorblattes an der Nabe des Windrades einer Windkraftanlage mit einer Einrichtung zur Einstellung des Rotorblatt-Anstellwinkels, umfassend zwei rotationssymmetrische, vorzugsweise ringförmige Anschlusselemente (4,5) mit jeweils wenigstens einer ebenen Anschlussfläche zum drehfesten Drehanschluss an der Nabe des Windrades einerseits und an dem Rotorblatt andererseits, wobei die beiden Anschlusselemente (4,5) derart ausgerichtet sind, dass ihre Symmetrieachsen koaxial zueinander verlaufen und ihre bevorzugten Anschlussflächen einander abgewandt sind, wobei sich ferner zwischen den beiden Anschlusselementen (4,5) ein Spalt (X) befindet, worin wenigstens eine Wälzlagerung (6,29) als Hauptlager angeordnet ist zur Lagerung der beiden Anschlusselemente (4,5) aneinander, drehbeweglich um eine Hauptdrehachse (2), welche der gemeinsamen Symmetrieachse beider Anschlusselemente (4,5) entspricht, und wobei wenigstens eine Mantelfläche eines Anschlusselements (4) mit einer rundum laufenden Verzahnung (12) versehen ist, womit wenigstens ein Getrieberad (8) kämmt, wobei das unverzahnte Anschlusselement (5) einen zu der Verzahnung (12) des verzahnten Anschlusselementes (4) konzentrischen, der Verzahnung (12) zugewandten Mantelabschnitt (23) aufweist mit einem oder mehreren, zu der Verzahnung (12) hin offenen Hohlräumen, worin das wenigstens eine, verzahnte Getrieberad (8) aufgenommen ist, **dadurch gekennzeichnet, dass** in dem unverzahnten Anschlusselement (5) zusätzlich zu je einer stirnseitigen Öffnung für jedes Getrieberad (8), wodurch ein Drehanschluss des betreffenden Getrieberades (8) zugänglich ist, mit dieser Öffnung etwa in einer axialen Flucht wenigstens ein zu einem Ring geschlossener Bereich vorgesehen ist, worin wenigstens eine in axialer Richtung zwischen den Anschlussflächen der beiden Anschlusselemente (4,5) angeordnete Lagerung (14,15) für das betreffende Getrieberad (8) als dessen Radlager abgestützt ist, so dass das betreffende Getrieberad (8) um eine gegenüber der Hauptdrehachse (2) exzentrisch versetzte, aber dazu etwa parallele Nebendrehachse (3) rotiert und mit der Verzahnung (12) des verzahnten Anschlusselements (4) kämmt.

2. Blattlagerbaugruppe (1) nach Anspruch 1, **dadurch gekennzeichnet, dass** das verzahnte Anschlusselement (4) einstückig aufgebaut ist oder aus mehreren Ringen zusammengesetzt ist.

3. Blattlagerbaugruppe (1) nach Anspruch 1 oder 2, **dadurch gekennzeichnet, dass** an einer der Verzahnung (12) gegenüber liegenden Mantelfläche des verzahnten Anschlusselements (4) wenigstens eine Laufbahn (29) für eine Wälzkörperreihe (6) der Hauptlagerung angeordnet ist, und/oder ein rundum laufender Bund (13), an welchem eine oder mehrere Laufbahn(en) (29) für die Wälzkörper (6) der Hauptlagerung angeordnet ist (sind).

4. Blattlagerbaugruppe (1) nach einem der Ansprüche 1 bis 3, **gekennzeichnet durch** in dem verzahnten Anschlusselement (4) kranzförmig verteilt angeordnete, Befestigungselemente (33) oder in dessen Anschlussfläche mündende Sacklochbohrungen mit Innengewinde, oder **durch** in dem verzahnten Anschlusselement (4) kranzförmig verteilt angeordnete, in dessen Anschlussfläche mündende Sacklochbohrungen mit Innengewinde, welche in radialer Richtung zwischen der Verzahnung (12) und wenigstens einer Laufbahn (29) für eine Wälzkörperreihe (6) der Hauptlagerung angeordnet sind, wobei die Verzahnung (12) und/oder wenigstens eine Laufbahn (29) für die Wälzkörperreihe(n) (6) der Hauptlagerung und/oder eine Reihe von kranzförmig angeordneten Befestigungselementen (33) oder Sacklochbohrungen mit Innengewinde, **durch** Bearbeitung oder Formgebung des selben Anschlusselement-Grundkörpers (4) gebildet sein können.

5. Blattlagerbaugruppe (1) nach einem der vorhergehenden Ansprüche, **dadurch gekennzeichnet, dass** in dem verzahnten Anschlusselement zur Aufnahme des unverzahnten Anschlusselements eine zu einer Stirnseite offene, rundum laufende Ausnehmung vorgesehen ist, oder eine zu einer Stirnseite offene, rundum laufende Ausnehmung, die einen T-förmigen Querschnitt aufweist, und/oder dass das unverzahnte Anschlusselement einen T-förmigen Querschnitt aufweist, oder einen T-förmigen Querschnitt, der kleiner ist als der Querschnitt der Ausnehmung in dem verzahnten Anschlusselement.

6. Blattlagerbaugruppe (1) nach einem der vorhergehenden Ansprüche, **dadurch gekennzeichnet, dass** die Hauptlagerung mehrere Reihen von Wälzkörpern (6) aufweist, und/oder wenigstens ein Axiallager mit wenigstens einer Reihe von Wälzkörpern (6), deren Tragwinkel gleich oder größer ist als 45°, und/oder wenigstens ein Radiallager mit wenigstens einer Reihe von Wälzkörpern (6), deren Tragwinkel kleiner ist als 45°, und/oder wenigstens eine Reihe von langgestreckten Wälzkörpern (6) wie rollen-, tonnen-, nadel- oder kegelförmigen Wälzkörpern, und/oder wenigstens eine Reihe von kugelförmigen Wälzkörpern (6), und/oder wenigstens zwei Reihen von kugelförmigen Wälzkörpern (6), und/oder vier oder mehr Reihen von kugelförmigen Wälzkörpern (6).

7. Blattlagerbaugruppe (1) nach einem der vorhergehenden Ansprüche, **dadurch gekennzeichnet, dass** wenigstens vier Reihen von kugelförmigen Wälzkörpern (6) jeweils mit einem Tragwinkel gleich oder größer als 45° vorgesehen sind, wobei innerhalb einer Schnittebene quer zur Umfangsrichtung der Blattlagerbaugruppe die Verbindungslinien zwischen den vier Kugelmittelpunkten ein rechtwinkliges Viereck bilden, oder ein rechtwinkliges Viereck in Form eines Rechtecks oder Quadrats.

8. Blattlagerbaugruppe (1) nach einem der vorhergehenden Ansprüche, **gekennzeichnet durch** in dem unverzahnten Anschlusselement (5) kranzförmig verteilt angeordnete Befestigungselemente (32), oder **durch** in dem unverzahnten Anschlusselement (5) kranzförmig verteilt angeordnete, in dessen Anschlussfläche mündende Bohrungen oder Sacklochbohrungen mit Innengewinde oder in einem der Verzahnung (12) des verzahnten Anschlusselementes (4) abgewandten Abschnitt (5,5') angeordnete Bohrungen oder Innengewinde-Sacklochbohrungen, wobei die Laufbahn(en) (29) für wenigstens eine Wälzkörperreihe (6) der Hauptlagerung und die Befestigungselemente (32) oder Sacklochbohrungen mit Innengewinde **durch** Bearbeitung oder Formgebung eines gemeinsamen Körpers oder Teilkörpers des unverzahnten Anschlusselements (5) gebildet sein können.

9. Blattlagerbaugruppe (1) nach einem der vorhergehenden Ansprüche, **dadurch gekennzeichnet, dass** das unverzahnte Anschlusselement (5) in seinem der Verzahnung (12) abgewandten Querschnittsbereich einen etwa schürzenförmigen oder querschnittlich etwa L-förmigen Laufbahnabschnitt (5,5') aufweist mit wenigstens einer Laufbahn (29) für eine Wälzkörperreihe (6) der Hauptlagerung, oder mit wenigstens einer unmittelbar eingearbeiteten Laufbahn (29) für eine Wälzkörperreihe (6) der Hauptlagerung.

10. Blattlagerbaugruppe (1) nach einem der vorhergehenden Ansprüche, **dadurch gekennzeichnet, dass** in seinem der Verzahnung (12) zugewandten Querschnittsbereich das unverzahnte Anschlusselement (5) wenigstens einen die Stirnseite des verzahnten Anschlusselements (4) umgreifenden Verbindungsabschnitt aufweist, oder einen kreisringscheibenförmigen Verbindungsabschnitt (11), welcher die Stirnseite des verzahnten Anschlusselements (4) umgreift, und/oder wenigstens einen etwa schürzenförmigen oder querschnittlich etwa L-förmigen Getriebeabschnitt (23), der sich an den kreisringscheibenförmigen (11) Abschnitt anschließt und die Getrieberäder (8) umgreift oder aufnimmt.

11. Blattlagerbaugruppe (1) nach einem der vorhergehenden Ansprüche, **dadurch gekennzeichnet, dass** der Getriebeabschnitt (23) einen etwa L-förmigen Querschnitt aufweist mit einem rundum laufenden Hohlraum zur gemeinsamen Aufnahme aller Getrieberäder (8), und/oder einen etwa in azimutaler Richtung variierenden Querschnitt mit mehreren, voneinander durch Zwischenstege abgeteilten Hohlräumen zur Aufnahme je eines Getrieberades (8).

**12.** Blattlagerbaugruppe (1) nach einem der vorhergehenden Ansprüche, **dadurch gekennzeichnet, dass** an dem Verbindungsabschnitt oder -teil (11) und/oder an dem Getriebeabschnitt oder -teil (23) ein um eine Nebendrehachse (3) ringförmig geschlossener Randbereich zur Abstützung einer Radlagerung (15) für das betreffende Getrieberad (8) vorgesehen ist.

**13.** Blattlagerbaugruppe (1) nach einem der vorhergehenden Ansprüche, **dadurch gekennzeichnet, dass** die Radlager (14,15) durch Kugellager gebildet sind, oder durch Radial-Kugellager, oder durch Vierpunkt-Kugellager, und/oder durch Wälzlager mit eigenen Laufbahnringen, deren äußerer Laufbahnring in den betreffenden, ringförmig geschlossener Randbereich des unverzahnten Anschlusselements (5) eingesetzt ist.

**14.** Blattlagerbaugruppe (1) nach einem der vorhergehenden Ansprüche, **dadurch gekennzeichnet, dass** die Verzahnung (12) des verzahnten Anschlusselements (4) sich an dessen Innenseite befindet.

**15.** Blattlagerbaugruppe (1) nach einem der Ansprüche 1 bis 14, wobei sowohl das Blattlager (1) als auch die daran gekoppelten Elemente, nämlich die Nabe einerseits und das betreffende Rotorblatt andererseits, auf zentrale Getriebe- oder Sonnenräder, welche die Haupt- oder Mittenachse (2) überlagern und sich um Selbige drehen, verzichtet, aufweisend:

- wenigstens vier und/oder pro Kreisquartal drei Ritzel (8), welche um die Mittenachse (2) angeordnet und jeweils separat an dem Gehäuseteil (11) auf der Abtriebsseite (AB) fest angeordnet oder fest anbringbar sind, jeweils um deren eigene Symmetrieachse (3) drehbar gelagert, mit jeweils äquidistanten Abständen (K) zur Mittenachse;
- im Inneren dieser Energieübertragungsbaugruppe (1) wenigstens ein zwei- oder mehrreihiges Großwälzlager, oder wenigstens ein zwei- oder mehrreihiges Großwälzlager mit zylindrischen Wälzkörpern (6) in zueinander orthogonal orientierten Laufbahnen (29);
- als Schutz des wenigstens einen zwei- oder mehrreihigen Großwälzlagers vor äußerlichem Eingriff, ein dieses wenigstens einseitig umschließendes Gehäuse, oder ein dieses wenigstens einseitig umschließendes Gehäuse unter zusätzlicher Anbringung mehrerer etwa parallel zueinander stehender Abdeckplatten (21;22);
- wobei das Großwälzlager mindestens einen Hauptwälzlagerring (4;5) als Außenring aufweist, sowie mindestens einen die Energie weiter leitenden inneren Hauptwälzlagerring (4), wobei der innere Hauptwälzlagerring (4) die Kräfte und Momente der Antriebsseite (AN) aufnimmt und auf die Abtriebsseite (AB) überträgt mittels direkt am Hauptwälzlagerring (4) angebrachten, nebeneinandergereihten und um die Mittenachse ringförmig angeordneten, verzahnten oder mit einer Verzahnung (13) versehenen, sowie kämmenden Elementen (12), wobei eine direkte oder indirekte Kopplung des mindestens einen Hauptwälzlagerrings (4;5) mit dem Gehäuseteil (11) auf einer Montageseite (AB) besteht, und/oder mit der Nabe (7) der Windkraftanlage, und wobei eine direkte oder indirekte Kopplung des korrespondierenden Hauptwälzlagerringe (4;5) mit der anderen Montageseite (AN) besteht, und/oder mit einem Rotorblatt (30) der Windkraftanlage.

**16.** Windkraftanlage mit einem um eine etwa in Windrichtung verlaufende Achse rotierenden Windrad, an dessen Nabe ein oder mehrere Rotorblätter gekoppelt sind über je eine Blattlagerbaugruppe (1) nach einem der vorhergehenden Ansprüche mit einer Einrichtung zur Verstellung des Rotorblatt-Anstellwinkels.

**Claims**

**1.** Rotor blade bearing assembly (1) for twistable bearing of a rotor blade at the hub of the wind turbine of a wind power plant with a device for the adjustment of the rotor blade pitch angle, comprising two rotationally symmetric, preferably ring-shaped connection elements (4,5), each with at least one plane connection face for the torque proof rotary connection at the hub of the wind turbine at the one hand and at the rotor blade on the other hand, where both connecting elements (4,5) are oriented in such a way that their symmetry axes are running coaxial to each other and their preferred connection faces are turned away from one another, where furthermore a gap (X) is located between both connecting elements (4,5), wherein at least one antifriction bearing (6,29) is arranged as main bearing for the bearing supporting of both connecting elements (4,5) against each other, rotatably movable around a main rotation axis (2), which corresponds to the common symmetry axis of both connecting elements (4,5), and where at least one lateral surface of a connecting element (4) is provided with an all-around circumferential toothing (12), in which at least one gearwheel (6) is cogging, where the untoothed connecting element (5) exhibits a lateral surface section (23) being concentric with the toothing (12) of the toothed connecting element (4) with one or several cavities that are open towards the toothing (12), wherein the at least one gearwheel (8) is placed, **characterized by the**

**fact** that in the untoothed connecting element (5) in addition to one face side opening for each gearwheel (8), through which a rotary connection of the gearwheel (8) in question is accessible, approximately axially in line with at least one area closed to a ring is provided, wherein at least one bearing support (14,15) located in axial direction between the connection faces of both connecting elements (4,5) for the gearwheel (8) in question is supported as its wheel bearing so that the gearwheel (8) in question is rotating around an auxiliary rotation axis (3), which is eccentrically offset against but oriented parallel to the main rotation axis (2), and cogs with the tooting (12) of the toothed connecting element (4).

2. Rotor blade bearing assembly (1) according to claim 1, **characterized by** the fact that the toothed connecting element (4) is either made of one piece or composed of several rings.

3. Rotor blade bearing assembly (1) according to claim 1 or 2, **characterized by** the fact that at a lateral surface the toothed connecting element (4) located opposite to the toothing (12) at least one raceway (29) for a row of rolling elements (6) of the main bearing is arranged and/or an all-around circumferential collar (13), at which one or more raceway(s) (29) for the rolling elements (6) of the main bearing is/are arranged.

4. Rotor blade bearing assembly (1) according to one of the claims 1 through 3, **characterized by** fastening elements (33) being annularly arranged in the toothed connecting element (4); or by blind hole drilled holes with internal thread ending in its connecting face, or by blind hole drilled holes with internal thread being annularly arranged in the toothed connecting element (4), ending in its connecting face, which are arranged in radial direction between the toothing (12) and at least one raceway (29) for a row of rolling elements (6) of the main bearing, at which the toothing (12) and/or at least one raceway (29) for the row(s) of rolling elements (6) of the main bearing and/or a row of annularly arranged fastening elements (33) or blind hole drilled holes with internal thread can be shaped by machining or contouring of the same connecting element base body (4).

5. Rotor blade bearing assembly (1) according to one of the foregoing claims, **characterized by** the fact that in the toothed connecting element for accommodating the untoothed connecting element a to one face side open, all-around circumferential recess is provided, or a to one face side open, all-around circumferential recess, which exhibits a T-shaped cross section, and/or that the untoothed connecting element exhibits a T-shaped cross section, or a T-shaped cross section, which is smaller than the cross section of the recesses in the toothed connecting element.

6. Rotor blade bearing assembly (1) according to one of the foregoing claims, **characterized by** the fact that the main bearing exhibits several rows of rolling elements (6), and/or at least one axial bearing with at least one row of rolling elements (6), where the support angle of which is equal to or greater than 45°, and/or at least one radial bearing with at least one row of rolling elements (6), where the support angle of which is smaller than 45°, and/or at least one row of elongated rolling elements (6) such as roller, barrel, needle, or tapered rolling elements, and/or at least one row of ball-shaped rolling elements (6), and/or at least two rows of ball-shaped rolling elements (6), and/or four or more rows of ball-shaped rolling elements (6).

7. Rotor blade bearing assembly (1) according to one of the foregoing claims, **characterized by** the fact that at least four rows of ball-shaped rolling elements (6), each with a support angle equal to or greater than 45° are provided, whereby within a sectional plane crosswise to the circumferential direction of the rotor blade bearing assembly the connecting lines between the four ball center points form a rectangular quadrilateral, or a rectangular quadrilateral in form of a rectangle or of a square.

8. Rotor blade bearing assembly (1) according to one of the foregoing claims, **characterized by** fastening elements (32) being annularly arranged in the untoothed connecting element (5), or by drilled holes or blind hole drilled holes with internal thread annularly arranged in the untoothed connecting element (5) ending in its connecting face or by drilled holes or blind hole drilled holes with internal thread arranged in a section (5.5') at the far side from the toothing (12) of the toothed connecting element (4), at which the raceway(s) (29) for at least one row of rolling elements (6) of the main bearing and the fastening elements (32) or blind hole drilled holes with internal thread can be shaped by machining or contouring of a common body or partial body of the untoothed connecting element (5).

9. Rotor blade bearing assembly (1) according to one of the foregoing claims, **characterized by** the fact that the untoothed connecting element (5) exhibits in its cross-sectional area being far side from the toothing (12) an approximately apron-like or by cross section approximately L-shaped raceway section (5,5') with at least one raceway (29) for a row of rolling elements (6) of the main bearing, or with at least one raceway (29) directly machined into the same for a row of rolling elements (6) of the main bearing.

**10.** Rotor blade bearing assembly (1) according to one of the foregoing claims, **characterized by** the fact that in its cross-sectional area being near side the toothing (12) the untoothed connecting element (5) exhibits at least one connecting section encompassing the face side of the toothed connecting element (4), or a circular ring disk shaped connecting section (11), which encompasses the face side of the toothed connecting element (4), and/or at least one approximately apron-like or by cross section approximately L-shaped gearing section (23), which is adjacent to the circular ring disk shaped connecting section (11) and encompasses or incorporates the gear wheels (8).

**11.** Rotor blade bearing assembly (1) according to one of the foregoing claims, **characterized by** the fact that the gear section (23) exhibits an approximately L-shaped cross section with an all-around circumferential cavity for the joint accommodation of all gear wheels (8), and/or a perhaps in azimuthal direction varying cross section with several cavities being separated from each other by intermediate webs, each to incorporate one gear wheel (8).

**12.** Rotor blade bearing assembly (1) according to one of the foregoing claims, **characterized by** the fact that at the connecting section or part (11) and/or at the gear section or part (23) a ring-shaped closed rim area around an auxiliary rotation axis (3) is provided for supporting a wheel bearing (15) for the respective gear wheel (8).

**13.** Rotor blade bearing assembly (1) according to one of the foregoing claims, **characterized by** the fact that the wheel bearings (14,15) are realized in form of ball bearings, or in form of radial ball bearings, or in form of four point ball bearings, and/or in form of antifriction bearings with own raceway rings, whereof the outer raceway ring is inserted in the corresponding ring-shaped closed rim area of the untoothed connecting element (5).

**14.** Rotor blade bearing assembly (1) according to one of the foregoing claims, **characterized by** the fact that the toothing (12) of the toothed connecting element (4), is located at the inner side of the same.

**15.** Rotor blade bearing assembly (1) according to one of the claims 1 through 14, at which for the rotor blade bearing (1) as well as also for the elements coupled to it, namely the hub at the one hand and the respective rotor blade on the other hand, central gears or sun gears that overlay the main or central axis (2) and rotate around the same, are spared, exhibiting:

- at least four and/or per each circle quadrant three pinions (8), which are arranged around the central axis (2) so that each of them is or can be separately fixedly arranged at the casing part (11) on the output side (AB), each of them pivot-mounted around their own symmetry axis (3), each with equidistant distances (K) to the central axis;
- inside this energy transmission assembly (1) at least one double row or multi-row large-diameter antifriction slewing ring, or at least one double row or multi-row large-diameter antifriction slewing ring with cylindrical rolling elements (6) in orthogonal to each other oriented raceways (29);
- for protection of the at least one double row or multi-row large-diameter antifriction slewing ring against intervention from the outside a casing surrounding the same at least one-sided, or a casing surrounding the same at least one-sided with the additional attachment of several covering plates (21;22) approximately standing parallel to each other;
- where the large-diameter antifriction slewing ring exhibits at least one main antifriction slewing ring (4;5) as outer race, and at least one inner main antifriction slewing ring (4.) transmitting the energy, where the inner main antifriction slewing ring (4.) absorbs the forces and moments of the drive side (AN) and transmits them to the output side (AB) by means of directly at the main antifriction slewing ring (4) attached, next to each other and ring-shaped around the central axis placed, toothed or with tooting (13), provided, as well as cogging elements (12), whereby a direct or indirect interconnection of the at least one main antifriction slewing ring (4;5) to the casing part (11) at one mounting side (AB) exists, and/or to the hub (7) of the wind power plant, and whereby a direct or indirect interconnection of the corresponding main antifriction slewing ring (4;5) to the other mounting side (AN) exists, and/or to a rotor blade (30) of the wind power plant.

**16.** Wind power plant with a wind turbine rotor rotating around an axis approximately oriented in wind direction, at the hub of which one or more rotor blades are coupled through one each rotor blade bearing assembly (1) according to one of the foregoing claims with an equipment for adjusting the rotor blade pitch angle.

**Revendications**

**1.** Ensemble palier de pale (1) servant à supporter en rotation une pale de rotor sur le moyeu de la roue éolienne d'une centrale éolienne comportant un dispositif de réglage de l'angle d'attaque de pale de rotor, comprenant deux éléments de raccordement(4, 5) symétriques en rotation, de préférence de forme annulaire qui possèdent chacun au moins une face de raccordement plane destinée au raccordement solidaire en rotation au moyeu de la roue éolienne d'une part, et à la pale de rotor d'autre part, en ce que les deux éléments de raccordement (4, 5) sont orientés de telle façon que leurs axes de symétrie sont coaxiaux l'un par rapport à l'autre et leurs faces de raccordement privilégiées se trouvent à l'opposé l'une de l'autre, en outre en ce qu'un écartement (X) est ménagé entre les deux éléments de raccordement (4, 5), au moins un palier à roulement (6, 29) étant disposé comme palier principal dans ledit écartement pour supporter les deux éléments de raccordement (4, 5) côte à côte, en rotation autour d'un axe de rotation principal (2) qui correspond à l'axe de symétrie commun des deux éléments de raccordement (4, 5), et en ce qu'au moins une surface d'enveloppe d'un élément de raccordement (4) est dotée d'une denture (12) périphérique avec laquelle au moins une roue d'engrenage (8) s'engrène, en ce que l'élément de raccordement non engrené (5) comporte par rapport à la denture (12) de l'élément de raccordement engrené (4) un segment d'enveloppe (23) concentrique, tourné vers la denture (12) avec une ou plusieurs cavités ouvertes vers la denture (12), dans lesquelles au moins une roue d'engrenage (8) engrenée est logée, **caractérisé en ce que** dans l'élément de raccordement non engrené (5), en plus pour chaque roue d'engrenage (8) comportant chacune une ouverture frontale permettant l'accès à un raccordement en rotation de la roue d'engrenage (8) concernée, au moins une zone fermée est prévue par rapport à une bague avec cette ouverture approximativement dans un alignement axial, ladite zone dans laquelle au moins un support (14, 15), disposé en sens axial entre les faces de raccordement des deux éléments de raccordement (4, 5), est appuyé comme palier de roue de la roue d'engrenage (8) concernée, de sorte que la roue d'engrenage (8) concernée tourne autour d'un axe de rotation secondaire (3) excentré par rapport à l'axe de rotation principal (2), mais approximativement parallèle à celui-ci et s'engrène avec la denture (12) de l'élément de raccordement engrené (4).

2. Ensemble palier de pale (1) selon la revendication 1, **caractérisé en ce que** l'élément de raccordement engrené (4) est de conception monobloc ou est composé de plusieurs bagues.

3. Ensemble palier de pale (1) selon la revendication 1 ou 2, **caractérisé en ce qu'** au moins un chemin de roulement (29) pour une rangée de corps de roulement (6) du support principal est disposé sur une surface d'enveloppe, opposée à la denture (12), de l'élément de raccordement engrené (4), et/ou un épaulement (13) périphérique sur lequel un ou plusieurs chemins de roulement (29) est/sont disposé(s) pour les corps de roulement du support principal (6).

4. Ensemble palier de pale (1) selon l'une des revendications 1 à 3, **caractérisé par** des éléments de fixation (33) répartis en forme de couronne dans l'élément de raccordement engrené (4) ou des alésages borgnes taraudés débouchant dans sa face de raccordement, ou par des alésages borgnes taraudés répartis en forme de couronne dans l'élément de raccordement engrené (4), débouchant dans sa face de raccordement, lesdits alésages borgnes étant disposés en sens radial entre la denture (12) et au moins un chemin de roulement (29) pour une rangée de corps de roulement (6) du support principal, en ce que la denture (12) et/ou au moins un chemin de roulement (29) pour la/les rangée(s) de corps de roulement (6) du support principal et/ou une rangée d'éléments de fixation (33) disposés en forme de couronne ou des alésages borgnes taraudés peuvent être réalisés par usinage ou moulage du même corps de base de l'élément de raccordement (4).

5. Ensemble palier de pale (1) selon l'une des revendications précédentes, **caractérisé en ce qu'**un évidement périphérique, ouvert vers une face frontale, est prévu dans l'élément de raccordement engrené pour le logement de l'élément de raccordement non engrené, ou un évidement périphérique, ouvert vers une face frontale, qui présente une section transversale en forme de T, et/ou **en ce que** l'élément de raccordement non engrené présente une section transversale en forme de T, ou une section transversale en forme de T qui est inférieure à la section transversale de l'évidement dans l'élément de raccordement engrené.

6. Ensemble palier de pale (1) selon l'une des revendications précédentes, **caractérisé en ce que** le support principal comporte plusieurs rangées de corps de roulement (6), et/ou au moins un palier axial avec au moins une rangée de corps de roulement (6) dont l'angle de portée est égal ou supérieur à 45°, et/ou au moins un palier radial avec au moins une rangée de corps de roulement (6) dont l'angle de portée est inférieur à 45°, et/ou au moins une rangée de corps de roulement (6) allongés comme des corps de roulement en forme de rouleau, de barillet, d'aiguille ou de cône, et/ou au moins une rangée de corps de roulement (6) sphériques, et/ou au moins deux rangées de corps de roulement (6) sphériques, et/ou quatre rangées ou plus de corps de roulement (6) sphériques.

7. Ensemble palier de pale (1) selon l'une des revendications précédentes, **caractérisé en ce qu'**au moins quatre rangées de corps de roulement (6) sphériques sont prévues chacune avec un angle de portée égal ou supérieur à 45°, **en ce que**, à l'intérieur d'un plan sécant transversal par rapport au périmètre de l'ensemble palier pale, les lignes de jonction entre les quatre centres de billes forment un quadrilatère à angles droits, ou un quadrilatère à angles droits en forme de rectangle ou de carré.

8.  Ensemble palier de pale (1) selon l'une des revendications précédentes, **caractérisé par** des éléments de fixation (32) répartis en forme de couronne dans l'élément de raccordement non engrené (5), ou par des alésages ou des alésages borgnes répartis en forme de couronne dans l'élément de raccordement non engrené (5), débouchant dans sa face de raccordement ou des alésages ou des alésages borgnes taraudés disposés dans un segment (5, 5') opposé à la denture (12) de l'élément de raccordement engrené (4), en ce que le/les chemin(s) de roulement (29) pour au moins une rangée de corps de roulement (6) du support principal et les éléments de fixation (32) ou des alésages borgnes taraudés peuvent être réalisés par usinage ou moulage d'un corps commun ou d'un corps partiel de l'élément de raccordement non engrené (5).

9.  Ensemble palier de pale (1) selon l'une des revendications précédentes, **caractérisé en ce que** l'élément de raccordement non engrené (5) présente dans sa zone de section transversale opposée à la denture (12) un segment de chemin de roulement (5, 5') approximativement en forme de tablier ou de section transversale approximativement en forme de L avec au moins un chemin de roulement (29) pour une rangée de corps de roulement (6) du support principal, ou avec au moins un chemin de roulement (29) directement inséré pour une rangée de corps de roulement (6) du support principal.

10. Ensemble palier de pale (1) selon l'une des revendications précédentes, **caractérisé en ce que**, dans sa zone de section transversale tournée vers la denture (12), l'élément de raccordement non engrené (5) présente au moins un segment de liaison enveloppant la face frontale de l'élément de raccordement engrené (4), ou un segment de liaison (11) en forme de disque annulaire circulaire qui enveloppe la face frontale de l'élément de raccordement engrené (4), et/ou au moins un segment d'engrenage (23) approximativement en forme de tablier ou de section transversale approximativement en forme de L qui se raccorde au segment en forme de disque annulaire circulaire (11) et enveloppe ou reçoit les roues d'engrenages (8).

11. Ensemble palier de pale (1) selon l'une des revendications précédentes, **caractérisé en ce que** le segment d'engrenage (23) présente une section transversale approximativement en forme de L comportant une cavité périphérique pour la réception commune de toutes les roues d'engrenage (8), et/ou une section transversale variant approximativement en sens azimutal comportant plusieurs cavités séparées les unes des autres par des entretoises intermédiaires pour la réception de respectivement une roue d'engrenage (8).

12. Ensemble palier de pale (1) selon l'une des revendications précédentes, **caractérisé en ce qu'**une zone périphérique fermée de forme annulaire autour d'un axe de rotation secondaire (3) pour l'appui d'un support de roue (15) pour la roue d'engrenage (8) concernée est prévue sur le segment ou la partie de liaison (11) et/ou sur le segment ou la partie d'engrenage (23).

13. Ensemble palier de pale (1) selon l'une des revendications précédentes, **caractérisé en ce que** les paliers de roues (14, 15) sont réalisés par des roulements à billes, ou par des roulements à billes radiaux, ou par des roulements à billes à quatre points, et/ou par des roulements avec leurs propres bagues de chemins de roulement dont la bague de chemin de roulement extérieure est insérée dans la zone périphérique concernée fermée, de forme annulaire, de l'élément de raccordement non engrené (5).

14. Ensemble palier de pale (1) selon l'une des revendications précédentes, **caractérisé en ce que** la denture (12) de l'élément de raccordement engrené (4) se trouve sur sa face intérieure.

15. Ensemble palier de pale (1) selon l'une des revendications 1 à 14, en ce qu' aussi bien le palier de pale (1) que les éléments qui y sont couplés, à savoir le moyeu d'une part et la pale de rotor concernée d'autre part, renonçant à des roues d'engrenage ou des roues solaires centrales qui chevauchent l'axe principal ou l'axe médian (2) et tournent autour de celui-ci, comportant :

    - au moins quatre et/ou trois pignons (8) par quart de circuit, lesdits pignons étant disposés autour de l'axe médian (2) et respectivement disposés à demeure, séparément sur l'élément de carter (11) côté sortie (AB) ou pouvant être fixés à demeure, respectivement montés en rotation autour de leur propre axe de symétrie (3), avec respectivement des écarts (K) équidistants par rapport à l'axe médian ;

- à l'intérieur de cet ensemble de transmission d'énergie (1) au moins un palier à roulement de grande dimension à deux rangées ou plus, ou au moins un palier à roulement de grande dimension à deux rangées ou plus comportant des corps de roulement (6) cylindriques dans des chemins de roulement (29) orientés de manière orthogonale l'un vers l'autre ;

- comme protection du palier à roulement de grande dimension à au moins deux rangées ou plus contre tout engagement externe, ou ce carter entourant au moins un côté de celui-ci, ou un carter entourant au moins un côté de celui-ci par montage additionnel de plusieurs plaques de protection (21 ; 22) approximativement parallèles les unes par rapport aux autres ;

- en ce que le palier à roulement de grande dimension comporte au moins une bague de palier à roulement principal (4 ; 5) en tant que bague extérieure, ainsi qu'au moins une bague de palier à roulement principal (4) intérieure transférant l'énergie, en ce que la bague de palier de roulement principal (4) intérieure absorbe les forces et les couples du côté entraînement (AN) et transmet sur le côté sortie (AB) au moyen d'éléments (12) directement montés sur la bague de palier de roulement principal (4), alignés et disposés selon une forme annulaire autour de l'axe médian, engrenés ou dotés d'une denture (13) ainsi qu'engrenant, en ce qu'un couplage direct ou indirect d'au moins une bague de palier de roulement principal (4 ; 5) à l'élément de carter (11) côté montage (AB) existe, et/ou avec le moyeu (7) de la centrale éolienne, et en ce qu'un couplage direct ou indirect de la bague de palier de roulement principal (4 ; 5) correspondant avec l'autre côté de montage (AN) existe, et/ou avec une pale de rotor (30) de la centrale éolienne.

16. Centrale éolienne avec une roue éolienne tournant autour d'un axe approximativement dans le sens du vent, sur le moyeu de laquelle sont couplées une pale de rotor ou plus par l'intermédiaire de respectivement un ensemble palier de pale (1) selon l'une des revendications précédentes avec un dispositif servant au réglage de l'angle d'attaque de pale de rotor.

Fig.1

Fig.2

AB

AN

21 23

MITTELPUNKT 2

1'

28
20

17
9'
18
27
3'

16
12

31
29
6'

33
33

6'
29

32

5a'

11';5b' 32 29 6' 29

Fig.3

MITTELPUNKT 2

AB

24    8"

1"

AN

S

27

3"

9"

8"
14
24

15

13",4"

SG

29

GZ

X

GA

5b

5a

L

Fig.4

MITTELPUNKT 2

AB

AN

Fig.5a

Fig.5b

Fig.12

AB

AN

MITTELPUNKT 2

1 (8)

11  15  19  25

21

31

18

9

27

20

28

31

11

6 (8)

32

7

6 (8)

4c (8)

22

23

14

8

3

23

4a (8)

4b (8)

6 (8)

5 (8)

6 (8)

35

4d (8)

Fig.6a

8

2

A

A

16

Fig.6b

3

8

16

27

Fig.6c

8

A-A

3

U1

DR

16

BR

U2

27

Fig.7

Fig.8

Fig.9

Fig.10

Fig.11

**IN DER BESCHREIBUNG AUFGEFÜHRTE DOKUMENTE**

**In der Beschreibung aufgeführte Patentdokumente**

- DE 202005007450 U1
- EP 1596064 A